# EUROPÄISCHE PATENTSCHRIFT

(11) **EP 2 201 337 B1**
(45) Veröffentlichungstag und Bekanntmachung des Hinweises auf die Patenterteilung: **12.09.2018**
(21) Anmeldenummer: 08841933.8
(22) Anmeldetag: 21.10.2008
(51) Int. Cl.: G01F 1/84

(54) **MESSWANDLER VOM VIBRATIONSTYP**
MEASURING TRANSDUCER OF THE VIBRATION TYPE
TRANSDUCTEUR DE VIBRATIONS

(30) Priorität: 22.10.2007 DE 102007050686
(43) Veröffentlichungstag der Anmeldung: 30.06.2010
(73) Patentinhaber: Endress+Hauser Flowtec AG, 4153 Reinach (CH)
(72) Erfinder: DRAHM, Wolfgang, 85435 Erding (DE); FUCHS, Michael, 79427 Eschbach (DE); PROBST, Leonhard, CH-4143 Dornach (CH); RIEDER, Alfred, 84032 Landshut (DE)
(74) Vertreter: Andres, Angelika Maria
(86) Internationale Anmeldenummer: PCT/EP2008/064170
(87) Internationale Veröffentlichungsnummer: WO 2009/053344

(56) Entgegenhaltungen:
- EP-A- 0 759 542
- FR-A- 2 598 801
- US-A- 3 329 019
- US-A- 5 291 792
- US-A1- 2006 173 639
- US-B2- 6 840 109

## Beschreibung

Die Erfindung betrifft einen, insb. für eine Verwendung in einem Coriolis-Massedurchflußmesser geeigneten, Meßwandler vom Vibrationstyp mit wenigstens einem zumindest zeitweise vibrierenden Meßrohr zum Führen von zu messendem Medium, einem Gegenschwinger, der unter Bildung einer ersten Kopplungszone einlaßseitig am Meßrohr fixiert ist und der unter Bildung einer zweiten Kopplungszone auslaßseitig am Meßrohr fixiert ist, eine Erregeranordnung zum Antreiben zumindest des Meßrohrs sowie eine Sensoranordnung zum Erfassen von Schwingungen zumindest des Meßrohrs.

In der industriellen Meßtechnik werden, insb. im Zusammenhang mit der Regelung und Überwachung von automatisierten verfahrenstechnischen Prozessen, zur Ermittlung von charakteristischen Prozeßparametern, beispielsweise eines Massedurchflusses, einer Dichte, einer Viskosität etc., von in einer Rohrleitung strömenden Medien, beispielsweise von Flüssigkeiten und/oder Gasen, werden oftmals, insb. als Coriolis-Massedurchflußmesser ausgebildete, In-Line-Meßgeräte verwendet, die mittels eines Meßwandlers vom Vibrationstyp und einer daran angeschlossener Betriebs- und Auswerteelektronik, im strömenden Medium Kräfte, beispielsweise Corioliskräfte, induzieren und von diesen abgeleitet ein den wenigstens einen Parameter entsprechend repräsentierendes Meßsignal erzeugen. Derartige In-Line-Meßgeräte mit einem Meßwandler vom Vibrationstyp sind seit langem bekannt und haben sich gleichermaßen im industriellen Einsatz etabliert. Beispiele für solche Meßwandler, insb. auch deren Verwendung in Coriolis-Massedurchflußmessern, sind z.B. in der EP-A 317 340, der US-A 48 23 614, der US-A 52 91 792, der US-A 53 98 554, der US-A 54 76 013, der US-A 56 02 345, der US-A 56 91 485, US-A 57 96 010, der US-A 57 96 012, der US-A 59 45 609, der US-A 59 79 246, der US-B 63 97 685, der US-B 66 91 583, der US-B 68 40 109, US-B 70 77 014, US-B 70 17 424, der US-A 2007/0186685, der US-A 2007/0119265, der US-A 2007/0119264, der WO-A 99 40 394, der WO-A 01 02 816 oder der WO-A 00 14 485 beschrieben.

Jeder der darin gezeigten Meßwandler umfaßt wenigstens ein im wesentlichen gerades, im Betrieb vibrierendes Meßrohr zum Führen des Mediums, welches Meßrohr über ein einlaßseitig einmündendes Einlaßrohrstück und über ein auslaßseitig einmündendes Auslaßrohrstück mit der Rohrleitung kommuniziert.

Ferner umfaßt jeder der gezeigten Meßwandler jeweils wenigstens einen einstückigen oder mehrteilig ausgeführten Gegenschwinger, der unter Bildung einer ersten Kopplungszone einlaßseitig an das Meßrohr gekoppelt ist und der unter Bildung einer zweiten Kopplungszone auslaßseitig an das Meßrohr gekoppelt ist und der im Betrieb zumindest anteilige ebenfalls vibrieren gelassen wird. Bei den beispielsweise in der US-A 52 91 792, der US-A 57 96 010, der US-A 59 45 609, der US-B 70 77 014, der US-A 2007/0119264, der WO-A 01 02 816 oder auch der WO-A 99 40 394 gezeigten Meßwandler mit einem einzigen, im wesentlichen geraden Meßrohr sind letzteres und der Gegenschwinger, wie bei herkömmlichen, industrietauglichen Meßwandlern durchaus üblich, zueinander im wesentlichen koaxial ausgerichtet. Darüberhinaus ist bei marktgängigen Meßwandlern der vorgenannten Art auch der Gegenschwinger zumeist im wesentlichen rohrförmig und im wesentlichen gerade ausgebildet und zudem derart im Meßwandler angeordnet, daß das Meßrohr zumindest teilweise vom Gegenschwinger ummantelt ist und Meßrohr und Gegenschwinger im wesentlichen koaxial ausgerichtet sind.

Meßwandler der in Rede stehenden Art umfassen des weiteren eine Erregeranordnung, die das Meßrohr im Betrieb, angesteuert von einem entsprechend konditionierten elektrischen Treibersignal, mittels wenigstens eines darauf einwirkenden elektro-mechanischen, insb. elektro-dynamischen, Schwingungserregers zu Biegeschwingungen üblicherweise möglichst überwiegend oder ausschließlich in einer einzigen gedachten - im weiteren als Primär-Schwingungsebene bezeichneten - Rohrschwingungsebene anregt, die die beiden Kopplungszonen imaginär schneidet. Desweiteren weisen derartige Meßwandler eine Sensoranordnung mit, insb. elektro-dynamischen, Schwingungssensoren zum zumindest punktuellen Erfassen einlaßseitiger und auslaßseitiger Schwingungen des Meßrohrs und zum Erzeugen von vom Massedurchfluß beeinflußten elektrischen Sensorsignalen auf.

Die Erregeranordnung weist wenigstens einen elektrodynamischen und/oder differentiell auf Meßrohr und Gegenschwinger einwirkenden, Schwingungserreger auf, während die Sensoranordnung einen einlaßseitigen, zumeist ebenfalls elektrodynamischen, Schwingungssensor sowie einen dazu im wesentlichen baugleichen auslaßseitigen Schwingungssensor umfaßt. Bei markgängigen Meßwandlern mit einem einzigen Meßrohr und einem daran gekoppelten Gegenschwinger ist der Schwingungserreger üblicherweise mittels einer zumindest zeitweise von einem Strom durchflossene und zumindest zeitweise von einem Magnetfeld durchsetzte Spule sowie einen mit der wenigstens eine Spule wechselwirkenden, insb. in diese eintauchenden, Anker gebildet, der entsprechend am Meßrohr fixiert ist. Zudem ist bei herkömmlichen Meßwandlern die Erregeranordnung üblicherweise derart ausgebildet und im Meßwandler plazierte, daß sie im wesentlichen mittig an das Meßrohr angreift. Zumeist ist der wenigstens eine Schwingungserreger und insoweit die Erregeranordnung dabei ferner, wie beispielsweise auch bei den in der US-A 57 96 010, der US-B 68 40 109, der US-B 70 77 014 oder der US-B 70 17 424 vorgeschlagenen Meßwandlern gezeigt, zumindest punktuell entlang einer gedachten mittigen Umfangslinie des Meßrohrs außen an diesem fixiert, während beispielsweise bei der US-A 48 23 614 die Erregeranordnung mittels zweier nicht im Zentrum des Meßrohres an diesem fixierten Schwingungserreger gebildet ist.

Bei den meisten Meßwandlern der beschriebenen Art sind die Schwingungssensoren der Sensoranordnung, wie bereits angedeutet, nach dem gleichen Prinzip aufgebaut, wie vorgenannte Schwingungserreger. Dementsprechend sind auch die Schwingungssensoren einer solchen Sensoranordnung zumeist jeweils mittels wenigstens einer üblicherweise am Gegenschwinger fixierten, zumindest zeitweise von einem Strom durchflossene und zumindest zeitweise von einem Magnetfeld durchsetzte Spule sowie einem am Meßrohr fixierten, mit der wenigstens eine Spule zusammenwirkenden Anker gebildet. Jede der vorgenannten Spulen ist zudem mittels wenigstens eines Paars elektrischer Anschlußleitungen mit der erwähnten Betriebs- und Auswerteelektronik des In-Line-Meßgeräts verbunden. Die Anschlußleitungen sind üblicherweise auf möglichst kurzem Wege von den Spulen über den Gegenschwinger hin zum Wandlergehäuse geführt. Neben den für das Erfassen von Vibrationen des Meßrohrs vorgesehenen Schwingungssensoren kann der Meßwandler, wie u.a. auch in der EP-A 831 306, der US-A 57 36 653, der US-A 53 81 697 oder der WO-A 01/02 816 vorgeschlagen, noch weitere, insb. dem Erfassen eher sekundärer Meßgrößen, wie z.B. Temperatur, Beschleunigung, Dehnung, Spannung etc., dienende am jedenfalls mittels Meßrohr, Gegenschwinger sowie die daran jeweils angebrachten Erreger- und Sensoranordnung gebildeten Innenteil oder aber auch in dessen Nähe angeordnete Sensoren aufweisen.

Schließlich weist jeder der in der US-A 52 91 792, der US-A 59 45 609, der US-B 70 77 014, der US-A 2007/0119264, der WO-A 01 02 816 oder auch der WO-A 99 40 394 gezeigten Meßwandler ein, insb. direkt am Einlaßrohrstück und am Auslaßrohrstück fixiertes, das Meßrohr mit daran gekoppeltem Gegenschwinger sowie die vorgesehene Erreger- und Sensoranordnung umhüllendes zusätzliches Wandlergehäuse auf, während beispielsweise bei dem in der US-A 48 23 614 gezeigten Meßwandler das Wandlergehäuse *quasi* durch den Gegenschwinger selbst gebildet ist oder, anders gesagt, Wandlergehäuse und Gegenschwinger ein und dieselbe Baueinheit sind.

Ein Vorteil von Meßwandlern mit geradem Meßrohr besteht im Vergleich zu solchen mit gebogenem Meßrohr z.B. darin, daß die sich die Meßrohr in nahezu jeder beliebigen Einbaulage, insb. auch nach einer in-line durchgeführten Reinigung, mit hoher Sicherheit rückstandsfrei selbst entleeren. Ferner sind solche Meßrohre im Vergleich z.B. zu einem gebogenen Meßrohr wesentlich einfacher und dementsprechend kostengünstiger herzustellen und verursachen im Betrieb zumeist einen geringeren Druckverlust.

Ein gerades Meßrohr bewirkt bekanntlich im hindurchströmenden Medium Corioliskräfte, wenn selbiges Meßrohr zu Biegeschwingungen in der Primär-Schwingungsebene gemäß einer ersten Eigenschwingungsform - dem sogenannten Antriebs- oder auch Nutz-Mode - angeregt ist. Bei herkömmlichen Meßaufnehmern der vorgenannten Art, beispielsweise auch solchen wie in der US-A 52 91 792, der US-B 68 40 109, der US-B 70 77 014 oder der US-B 70 17 424 vorgeschlagen, bei denen das Meßrohr im Nutzmode vornehmlich in der gedachten Primär-Schwingungsebene oszillieren gelassen wird, führen diese Corioliskräfte wiederum dazu, daß selbigen Biege-Schwingungen im Nutzmode koplanare - also ebenfalls in der Primär-Schwingungsebene vollführte - Biegeschwingungen gemäß einer zweiten Eigenschwingungsform von zumeist höherer Ordnung, jedenfalls aber anderen Symmetrieeigenschaften - dem sogenannten Coriolis- oder auch Meßmode -überlagert werden. Infolge der Biege-Schwingungen im Coriolis-Mode weisen die mittels der Sensoranordnung einlaßseitig und auslaßseitig erfaßten Schwingungen eine auch vom Massedurchfluß abhängige, meßbare Phasendifferenz auf.

Üblicherweise werden die Meßrohre derartiger Meßwandler, insb. solcher, die in Coriolis-Massedurchflußmessern eingesetzt sind, im Nutzmode auf einer momentanen Resonanzfrequenz der ersten Eigenschwingungsform, insb. bei konstantgeregelter Schwingungsamplitude, angeregt. Da diese Resonanzfrequenz im besonderen auch von der momentanen Dichte des Mediums abhängig ist, kann mittels marktüblicher Coriolis-Massedurchflußmesser neben dem Massedurchfluß zumindest auch die Dichte von strömenden Medien direkt gemessen werden.

Ein besonderes Problem vorbeschriebener Meßwandler mit geradem Meßrohr besteht, wie beispielsweise auch in der US-A 52 91 792 oder US-B 70 77 014 diskutiert, allerdings darin, daß sie nicht nur die oben genannten natürlichen Schwingungsmoden aufweisen, in dem das Meßrohr Biegeschwingungen in der erwähnten Primär-Schwingungsebene ausführt, sondern auch solche natürlichen Schwingungsmode, in denen das Meßrohr Biegeschwingungen in einer weiteren gedachten, zur Primär-Schwingungsebene im wesentlichen orthogonalen gleichwohl die beiden Kopplungszonen imaginär schneidende Sekundär-Schwingungsebene ausführen kann, und daß jene Schwingungsmoden in der Sekundär-Schwingungsebene ohne das Ergreifen besonderer Maßnahmen naturgemäß in etwa dieselbe Resonanzfrequenz aufweisen, wie der jeweils korrespondierende Schwingungsmode in der Primär-Schwingungsebene. Anders gesagt, können bei Meßwandlern der in Rede stehenden Art mit geradem Meßrohr allfällige Meßungenauigkeiten daraus resultieren, daß zusätzlich zum erwünscht angeregten Nutzmode in der Primär-Schwingungsebene unerwünschte und insoweit störende Schwingungen in der Sekundär-Schwingungsebene auftreten, die sehr dicht an den Schwingfrequenzen des Nutzmodes liegen. Gleichermaßen wie dem Nutzmode in der Primär-Schwingungsebene würden dann auch dem in unerwünschter Weise angeregten gleichfrequenten Schwingungsmode in der Sekundär-Schwingungsebene dazu koplanare, durch entsprechende Corioliskräfte bedingte zusätzliche Schwingungsmoden induziert. Ursache für solche Störungen können beispielsweise Vibrationen in der angeschlossen Rohrleitung oder auch vom strömenden Medium ausgehendes, zumeist breitbandiges Rauschen sein.

Infolge von *in praxi* nahezu unvermeidlichen Querempfindlichkeiten der Schwingungssensoren auf Schwingungen in der Sekundär-Schwingungsebene führt dies dazu, daß die unter solchen Umständen gelieferten Sensorsignale anteilig sowohl Schwingungen des Meßrohrs in der Primär-Schwingungsebene als auch korrespondierende Schwingungen des Meßrohrs Sekundär-Schwingungsebene in einem für die Meßgenauigkeit signifikantem Maße reflektieren, eine Zuordnung der entsprechenden Signalanteile auf die Primär- bzw. Sekundär-Schwingungsebene wegen der im wesentlichen gleichen Frequenzen korrespondierender Schwingungen praktisch nicht möglich ist.

Darüberhinaus ist bei hinreichend starker mechanischer Kopplung von Schwingungsmoden beider Schwingungsebenen auch ein Transfer von Schwingungsenergie - spontan oder periodisch - von der Primär- in die Sekundär-Schwingungsebene bzw. auch umgekehrt von der Sekundär- in die Primär-Schwingungsebene möglich. Infolgedessen können die Sensorsignale beispielsweise eine für deren Signalverarbeitung wie auch für die auf den Sensorsignalen basierende Schwingungsregelung durchaus schädliche charakteristische Schwebung aufweisen. Desweiteren können Schwingungsbewegungen in der Sekundär-Schwingungsebene, seien sie nun durch äußere Störungen direkt oder über den vorgenannten Energietransfer von der Primär- in die Sekundär-Schwingungsebene indirekt angeregt, dazu führen, daß die Sensorsignale zeitweise überhöhte Signalpegel aufweisen können, mit der Folge, daß die Sensorsignale empfangende und verarbeitende Eingangsverstärker entsprechend aufwendig dimensioniert sein müssen und somit vergleichsweise teuer sind.

Zur Unterdrückung solcher in der Sekundär-Schwingungsebene vollführten, insgesamt sehr schädlichen Schwingungen ist es üblich, eine für diese Schwingungen effektive Steifigkeit des Meßrohrs gegenüber einer für Schwingungen in der Primär-Schwingungsebene effektive Steifigkeit des Meßrohrs bei im wesentlichen gleichbleibenden effektiven Massen zu erhöhen und somit Resonanzfrequenzen von miteinander korrespondierenden Schwingungsmoden der Primär- bzw. Sekundär-Schwingungsebene wirksam voneinander zu separieren. Typischerweise werden hierbei Frequenzabstände von mehr als 30 Hz angestrebt.

Bei dem in der US-A 56 02 345 wird hierfür beispielsweise die Verwendung von ein- und auslaßseitig in unmittelbarer Nähe zu den jeweiligen Kopplungszonen am jeweiligen Meßrohr zusätzlich angebrachte, als flache Stege ausgebildete Federelemente vorgeschlagen. Als eine weitere Möglichkeit zur Separierung von Schwingungsmoden in der Primär- Schwingungsebene von korrespondierenden Schwingungsmoden in der Sekundär-Schwingungsebene ist ferner in der US-A 52 91 792 gezeigt. Bei dem dort vorgeschlagenen Meßwandler ist die für Schwingungen in der Sekundär-Schwingungsebene effektive Steifigkeit des Meßrohrs dadurch erhöht, daß das Meßrohr in seinem Zentrum mit einem entsprechend wirkenden als sich im wesentlichen in radialer Richtung zu Meßrohr und Gegenschwinger erstreckend im Meßwandler angeordnete, hier U-förmige, Versteifungsfeder ausgebildeten Federelement beaufschlagt ist, das die Steifigkeit Meßrohrs für den Coriolismode in der Primär-Schwingungsebene nicht nennenswert beeinflußt. Dadurch kann erreicht werden, daß sich die Schwingfrequenz der Schwingungen im Nutzmode hinreichend stark von der Frequenz ungewollter, also störender Schwingungen abhebt und somit der Einfluß solcher störenden Schwingungen weitgehend unterdrückt wird.

Ein Nachteil einer solchen zentral wirkenden, eher punktuell am Meßrohr angreifenden Versteifungsfeder ist jedoch darin zu sehen, daß unvermindert asymmetrische Schwingungsmoden in der Sekundär-Schwingungsebene angeregt werden können, wie etwa das Pendant zum Coriolis-Mode in der Primär-Schwingungsebene, einhergehend mit den oben beschriebenen Nachteilen. Darüberhinaus muß ein solche zentral, also am Ort maximaler Schwingungsamplitude wirkende Versteifungsfeder, entsprechend mechanisch stabil und entsprechend schwingungsfest ausgelegt werden. Anderseits aber sind auch die in der US-A 56 02 345 vorgeschlagenen Stege nur mit vergleichsweise hohem Aufwand zu befestigen und zu justieren, insb. auch bei Anwendung dieses Prinzips auf ein einziges Meßrohr mit koaxial dazu angeordnetem, rohrförmigem Gegenschwinger.

Eine Aufgabe der Erfindung besteht daher darin, Meßwandler der vorgenannten Art mit zumindest einem zeitweise vibrierenden Meßrohr und einem ein- und auslaßseitig am Meßrohr fixierten Gegenschwinger dahingehend zu verbessern, daß eine im Vergleich den vorgestellten Lösungen noch effizientere Separierung der Resonanzfrequenzen der Schwingungsmoden in der Primär- und Sekundär-Schwingungsebene erreicht werden kann. Dies im besonderen auch bei gegenüber zumindest den vorgenannten Stegen vergleichbarem oder geringerem Fertigungsaufwand.

Zur Lösung der Aufgabe besteht die Erfindung in einem Meßwandler vom Vibrationstyp für ein in einer Rohrleitung strömendes Medium, gemäß dem unabhängigen Anspruch 1. Vorteilhafte Ausführungsformen der Erfindung sind in den abhängigen Ansprüchen angegeben.

Darüber hinaus besteht die Erfindung in der Verwendung eines Meßwandlers der oben genannten Art in einem, beispielsweise als Coriolis-Massendurchflußmeßgerät, Dichtemeßgerät, Viskositätsmeßgerät oder dergleichen ausgebildeten, In-Line-Meßgerät zum Messen und/oder Überwachen wenigstens eines Parameters, beispielsweise eines Massendurchflusse einer Dichte und/oder einer Viskosität, eines in einer Rohrleitung strömenden Mediums.

Ein Grundgedanke der Erfindung besteht u.a. darin, zur Frequenztrennung anstelle lediglich mittig am Meßrohr wirkende Federelemente solche Federlemente einzusetzen, die sowohl von der Mitte als auch von vorgenannten Kopplungszonen entfernt angreifen und so neben symmetrischen auch asymmetrische Störungen wirksam zu unterdrücken. Dies hat den Vorteil, daß so auch Störungen des zumeist asymmetrisch ausgebildeten Meßmodes, beispielsweise infolge von einseitig am in die Rohrleitung eingesetzen In-Line-Meßgerät angreifenden und/oder auch Taumelbewegungen des In-Line-Meßgeräts um eine seiner Trägheitshauptachsen bewirkende zeitlich veränderlichen Kräften, auf sehr einfache Weise sehr effektiv unterdrückt werden können. Zudem wird durch die Federelmente die Schwingungsachse klar definiert und auch bei allfälligen Störungen von außen weitestgehend ortsfest gehalten.

Eine besonders effektive Frequenztrennung läßt sich dabei beispielsweise durch Verwendung im wesentlichen stab- oder stangenförmig ausgebildeten Federelemente erzielen, die so im Meßwandler angeordnet sind, daß sie im wesentlichen in der Sekundär-Schwingungsebene verlaufen. Eine Relativbewegung zwischen Tilgerrohr und Messrohr senkrecht zu Nutz- und Coriolismode in der Primär-Schwingungsbene ist dadurch praktisch blockiert. Dies im besonderen dann, wenn selbige Federelemente so im Meßwandler angeordnet sind, daß sie sich im wesentlichen radial zu Meßrohr und/oder Gegenschwinger erstrecken. Zudem können stangenförmigen Federelemente, insb. im Vergleich zu den erwähnten endseitig am Meßrohr fixierten Stegen, kostengünstig hergestellt und montiert werden, wobei deren Wirkungsweise im Vergleich zu herkömmlicherweise verwendeten Federelementen deutlich effizienter ist.

Für den Fall, daß die Federelemente so im Meßwandler angeordnete sind, daß jedes davon unmittelbar an einer Umfangslinie des Meßrohrs angreift, entlang der auch der jeweilige Schwingungssensor plaziert ist, können zumindest daselbst Relativebewegungen zwischen Meßrohr und Gegenschwinger nahezu völlig ausgeschlossen werden. Dies führt zu dem weiteren Vorteil, daß von außen in der Sekundär-Schwingungsrichtung einwirkende Störungen am Schwingungssensor kein nenneswertes Strösignal mehr erzeugen können, selbst wenn dieser auch eine gewisse Querempfindlichkeit in dieser Schwingungsrichtung aufweisen würde.

Nachfolgend werden die Erfindung und vorteilhafte Ausgestaltungen derselben anhand eines Ausführungsbeispiels erläutert, das in den Figuren der Zeichnung dargestellt ist; gleiche Teile sind in den Figuren im übrigen mit gleichen Bezugszeichen versehen. Falls es der Übersichtlichkeit dienlich ist, wird auf bereits erwähnte Bezugszeichen in nachfolgenden Figuren verzichtet. Im einzelne sind in:
Fig. 1 ein in eine Rohrleitung einfügbares In-Line-Meßgerät zum Messen wenigstens eines Parameters eines in der Rohrleitung geführten Mediums gezeigt,
Fig. 2 geschnitten in einer Seitenansicht ein Ausführungsbeispiel für einen für das In-Line-Meßgerät von Fig. 1 geeigneten Meßwandler vom Vibrations-Typ mit einem Meßrohr und einem Gegenschwinger sowie endseitigen Auslegern gezeigt,
Fig. 3 der Meßwandler von Fig. 2 in einem Querschnitt gezeigt,
Fig. 4 der Meßwandler von Fig. 2 in einem anderen Querschnitt mit einem Federelement gezeigt,
Fign. 5 schematisch Biegelinien des Meßrohrs und des
   a bis d Gegenschwingers, jeweils oszillierend in einem lateralen Biegeschwingungsmode in einer Primär-Schwingungsebene des Meßwandlers, gezeigt,
Fign. 6a, b in zwei verschiedenen geschnittenen Ansichten eine Variante für einen Meßwandlers gemäß Fig. 2 mit zwei Federelementen gezeigt,
Fign. 7a, b in zwei verschiedenen geschnittenen Ansichten eine andere Variante für einen Meßwandlers gemäß Fig. 2 mit zwei Federelementen gezeigt,
Fign. 8a, b in zwei verschiedenen geschnittenen Ansichten eine weitere Variante für einen Meßwandlers gemäß Fig. 2 mit vier Federelementen gezeigt, und
Fig. 9 schematisch ein Ausschnitt eines Meßwandlers gemäß Fig. 2 mit einem an Meßrohr und Gegenschwinger befestigten Federelement gezeigt.

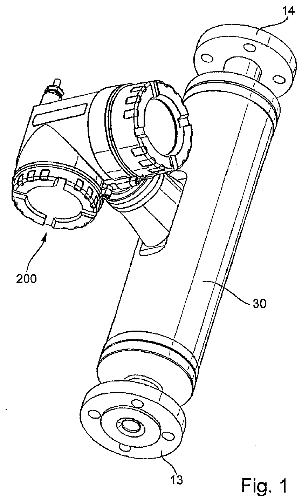

In der Fig. 1 ist ein in eine - hier nicht dargestellte - Rohrleitung einfügbares, beispielsweise als Coriolis-Massendurchflußmeßgerät, Dichtemeßgerät, Viskositätsmeßgerät oder dergleichen ausgebildetes, In-Line-Meßgerät gezeigt, das dem Messen und/oder Überwachen wenigstens eines Parameters, beispielsweise einem Massendurchfluß, einer Dichte, einer Viskosität etc., eines in der Rohrleitung strömenden Mediums dient. Das In-Line-Meßgerät umfaßt dafür einen an eine in einem entsprechenden Elektronik-Gehäuse 200 untergebrachte - hier nicht dargestellte - Betriebs- und Auswerteelektronik des In-Line-Meßgerät elektrisch angeschlossenen Meßwandler vom Vibrationstyp, der im Betrieb entsprechend vom zu messenden Medium durchströmt ist.

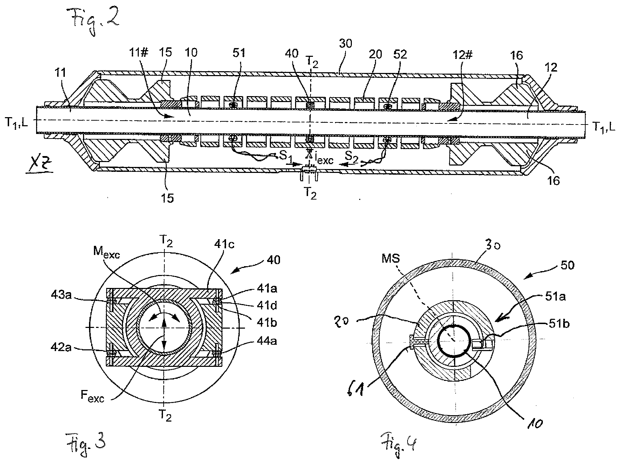

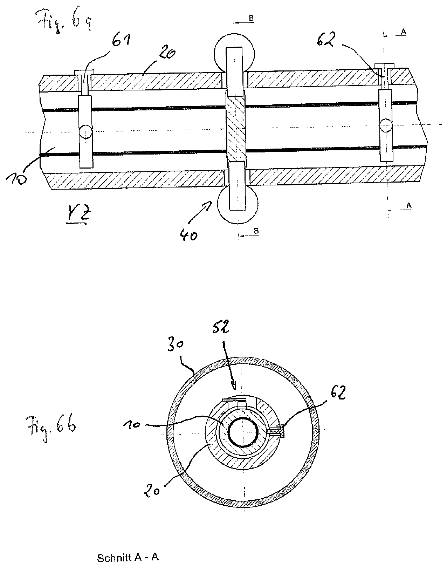

In den Fig. 2 bis 4 ist exemplarisch anhand eines konkreten Ausführungsbeispiel der prinzipielle Aufbau für einen solchen Meßwandler vom Vibrationstyp schematisch in verschiedenen Schnittansichten dargestellt. Darüber hinaus sind der prinzipielle mechanische Aufbau sowie dessen Wirkungsweise des exemplarisch gezeigte Meßwandlers mit den denen der in den US-A 2007/0119265, US-A 2007/0119264, US-B 66 91 583, der US-B 68 40 109 gezeigten Meßwandler vergleichbar. Weiterführende Ausführungsbeispiele und Ausgestaltungen des erfindungsgemäßen Meßwandlers sowie auch Einzelheiten davon sind zudem in den Fign. 6a, 6b, 7a, 7b, 8a, 8b sowie 9 gezeigt.

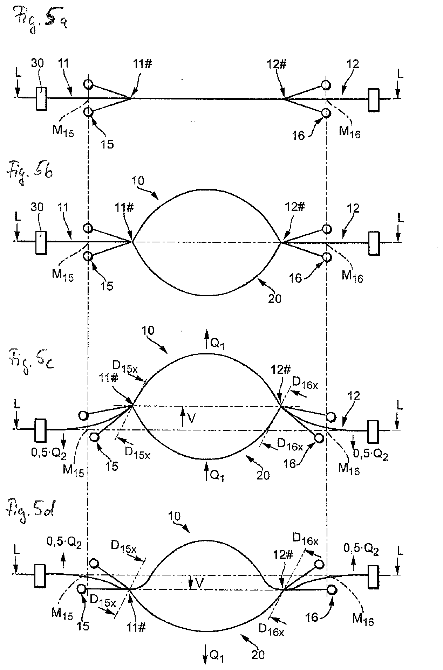

Der Meßwandler dient dazu, in einem hindurchströmenden Medium mechanische Reaktionskräfte, z.B. massedurchflußabhängige Coriolis-Kräfte, dichteabhängige Trägheitskräfte und/oder viskositätsabhängige Reibungskräfte, zu erzeugen, die meßbar, insb. sensorisch erfaßbar, auf den Meßwandler zurückwirken. Abgeleitet von diesen Reaktionskräften können so in der dem Fachmann bekannten Weise z.B. ein Massedurchfluß *m,* eine Dichte ρ und/oder eine Viskosität η des Mediums gemessen werden. Zum Führen des Mediums umfaßt Meßwandler wenigstens ein - im hier gezeigten Ausführungsbeispiel einziges, im wesentlichen gerades - Meßrohr 10, das im Betrieb vibrieren gelassen und dabei, um eine statische Ruhelage oszillierend, wiederholt elastisch verformt wird, wobei der Meßwandler wenigstens einen ersten natürlichen Schwingungsmode aufweist, in dem zumindest das Meßrohr Biegeschwingungen in einer gedachten Primär-Schwingungsebene XZ ausführen kann. Diese gedachte Primär-Schwingungsebene XZ entspricht im übrigen praktisch auch der Zeichenebene der Fig. 5a - 5d. Neben dem ersten natürlichen Schwingungsmode in der gedachten Primär-Schwingungsebene XZ weist der Meßwandler zudem allerdings naturgemäß wenigstens einen zweiten natürlichen Schwingungsmode, in dem zumindest das Meßrohr Biegeschwingungen in einer gedachten, zur gedachten Primär-Schwingungsebene XZ im wesentlichen orthogonalen Sekundär-Schwingungsebene YZ ausführen kann.

Zur Minimierung von auf das Meßrohr 10 wirkenden Störeinflüssen wie auch zur Reduzierung von seitens des Meßwandlers an die angeschlossene Rohrleitung abgegebener Schwingungsenergie ist im Meßwandler des weiteren ein - hier im wesentlichen gerader und im wesentlichen parallel zum Meßrohr 10 verlaufender - Gegenschwinger 20 vorgesehen. Dieser ist, wie auch in Fig. 2 gezeigt, unter Bildung einer - praktisch ein Einlaßende des Meßrohrs 10 definierenden - ersten Kopplungszone 11# einlaßseitig und der unter Bildung einer - praktisch ein Auslaßende des Meßrohrs 10 definierenden - zweiten Kopplungszone 12# auslaßseitig jeweils am Meßrohr 10 fixiert. Der Gegenschwinger 20 kann rohr - oder kastenförmiger ausgeführt und beispielsweise so am Einlaßende und am Auslaßende mit dem Meßrohr 10 verbunden sein, daß er, wie bei derartigen Meßwandlern durchaus üblich, im wesentlichen koaxial zum Meßrohr 10 ausgerichtet ist und somit das Meßrohr 10 vom Gegenschwinger 20 zumindest teilweise ummantelt ist. Zudem kann es von Vorteil sein, wenn der Gegenschwinger 20 wesentlich schwerer ausgelegt ist als das Meßrohr 10.

Zum Hindurchströmenlassen des zu messenden Mediums ist das Meßrohr 10 über ein einlaßseitig im Bereich der ersten Kopplungszone einmündendes Einlaßrohrstück 11 und über ein auslaßseitig im Bereich der zweiten Kopplungszone einmündendes, insb. zum Einlaßrohrstück 11 im wesentlichen identisches, Auslaßrohrstück 12 entsprechend an die das Medium zu- bzw. abführende - hier nicht dargestellte - Rohrleitung angeschlossen. Einlaßrohrstück 11 und Auslaßrohrstück 12 sind im gezeigten Ausführungsbeispiel wesentlichen gerade ausgeführt und zueinander, zum Meßrohr 10 sowie zu einer die Kopplungszonen praktisch verbindenden imaginären Längsachse L fluchtend ausgerichtet. In vorteilhafter Weise können Meßrohr 10, Einlaß- und Auslaßrohrstück 11, 12 einstückig ausgeführt sein, so daß zu deren Herstellung z.B. ein einziges rohrförmiges Halbzeug dienen kann. Anstelle dessen, daß Meßrohr 10, Einlaßrohrstück 11 und Auslaßrohrstück 12 jeweils durch Segmente eines einzigen, einstückigen Rohres gebildet sind, können diese, falls erforderlich aber auch mittels einzelner, nachträglich zusammengefügter, z.B. zusammengeschweißter, Halbzeuge hergestellt werden.

Nach einer Ausgestaltung der Erfindung ist das Meßrohr ferner so ausgebildet, daß es sich zwischen den beiden Kopplungszonen mit im wesentlichen gleichbleibendem, insb. kreisringförmigem, Querschnitt erstreckt. Im besonderen ist ferner vorgesehen, daß das Meßrohr 10 im wesentlichen zylindrisch geformt ist.

Im Betrieb des Meßwandlers wird das Meßrohr 10 - wie bereits mehrfach erwähnt - zumindest zeitweise zu lateralen Biegeschwingungen in der gedachten Primär-Schwingungsebene XZ, insb. im Bereich einer natürlichen Resonanzfrequenz eines entsprechenden natürlichen Schwingungsmodes, so angeregt, daß es sich in diesem sogenannten Nutzmode zumindest anteilig, insb. überwiegend, gemäß einer natürlichen ersten Eigenschwingungsform ausbiegt. Die Biegeschwingungen im Nutzmode sind dabei im wesentlichen transversal zu einer mit der Längsachse L im wesentlichen parallelen, insb. koinzidierenden, Biegeschwingungsachse ausgerichtet, die die beiden Kopplungszonen 11#, 12# imaginär miteinander verbindet. Nach einer Ausgestaltung der Erfindung ist hierbei ferner vorgesehen, daß das Meßrohr im Betrieb mittels der Erregeranordnung zumindest zeitweise derart angeregt ist, daß es überwiegend oder ausschließlich in der gedachten Primär-Schwingungsebene oszilliert.

Nach einer weiteren Ausgestaltung der Erfindung, wird das Meßrohr 10 dabei mit einer Schwingungsfrequenz, f_{exc}, angeregt, die möglichst genau einer natürlichen Resonanzfrequenz des sogenannten *f1*-Eigenmodes des Meßrohrs 10 entspricht, also einem symmetrischen Eigenmode bei dem, wie in Fign. 5b bis 5d schematisch dargestellt, das vibrierende, jedoch nicht vom Medium durchströmte Meßrohr 10 bezüglich einer zur Längsachse L senkrechten Mittelachse im wesentlichen symmetrisch ausgebogen wird und dabei im wesentlichen einen einzigen Schwingungsbauch aufweist, vgl. hierzu beispielsweise auch eingangs erwähnten US-A 2007/0119265, US-A 2007/0119264, US-B 66 91 583, oder US-B 68 40 109. Gleichermaßen wird auch der Gegenschwinger 20, wie in Fig. 5b schematisch dargestellt, im Betrieb des Meßwandlers ebenfalls zu Biegeschwingungen angeregt, die im wesentlichen koplanar, jedoch im wesentlichen gegenphasig zu den Biegeschwingungen des Meßrohrs 10 ausgebildet sind. Somit oszillieren Meßrohr 10 und Gegenschwinger 20 im Betrieb also zumindest zeitweise und/oder anteilig lateral in einem Nutzmode, in dem sie gemeinsam im wesentlichen koplanare Biegeschwingungen in der gedachten Primär-Schwingungsebene XZ ausführen.

Für den Fall, daß das Medium in der Rohrleitung strömt und somit der Massedurchfluß *m* von Null verschieden ist, werden mittels des in vorgenannter Weise vibrierenden Meßrohrs 10 im hindurchströmenden Medium Corioliskräfte induziert. Diese wiederum wirken auf das Meßrohr 10 zurück und bewirken so eine zusätzliche, sensorisch erfaßbare - hier jedoch nicht dargestellte - Verformung des Meßrohrs 10 gemäß einer natürlichen zweiten Eigenschwingungsform, die dem angeregten Nutzmode im wesentlich koplanar überlagert ist. Folglich schwingt das Meßrohr auch im Coriolis-Mode im wesentlichen entlang der gedachten Primär-Schwingungsebene XZ.

Die momentane Ausprägung der Verformung des Meßrohrs 10 ist dabei, insb. hinsichtlich ihrer Amplituden, auch vom momentanen Massedurchfluß m abhängig. Als zweite Eigenschwingungsform, dem sogenannten Coriolismode, kann, wie bei derartigen Meßwandlern üblich, z.B. die Eigenschwingungsform des anti-symmetrischen *f2*-Eigenmodes, also jene mit zwei Schwingungsbäuchen und/oder die Eigenschwingungsform des anti-symmetrischen *f4*-Eigenmodes mit vier Schwingungsbäuchen dienen. Gemäß einer Ausgestaltung der Erfindung sind ferner Meßrohr 10 und Gegenschwinger 20 so dimensioniert, daß das leere Meßrohr 10 eine niedrigste natürliche Eigenfrequenz, f₁₀, aufweist, die größer oder etwa gleich einer niedrigsten natürlichen Eigenfrequenz, f 20, des Gegenschwingers 20 ist. Im besonderen sind Meßrohr 10 und Gegenschwinger 20 dabei so dimensioniert, daß das mit Wasser befüllte Meßrohr 10 eine niedrigste natürliche Eigenfrequenz, f_{10,H2O}, aufweist, die mindestens gleich einer niedrigsten natürlichen Eigenfrequenz, f₂₀, des Gegenschwingers 20 ist. Gemäß einer weiteren Ausgestaltung der Erfindung ist ferner vorgesehen, Meßrohr 10 und Gegenschwinger 20 hinsichtlich ihrer Schwingungseigenschaften so aufeinander abzustimmen, daß eine niedrigste natürliche Eigenfrequenz, f₁₀, _{H2O} Meßrohrs 10 auch dann mindestens einem 1,1-fachen einer niedrigsten natürlichen Eigenfrequenz, f₂₀, des Gegenschwingers 20 entspricht, wenn es vollständig mit Wasser befüllt ist. Bei einem Meßrohr aus Titan mit einer Nennweite DN von etwa 55 mm, einer Länge, L₁₀, von etwa 570 mm und einer Wandstärke von etwa 2,5 mm würde eine natürliche Resonanzfrequenz, f_{10, Luft}, des *f1*-Eigenmodes des leeren Meßrohrs etwa bei 550 Hz liegen, während eine natürliche Resonanzfrequenz, f_{10, H2O}, des *f1*-Eigenmodes des mit Wasser befüllten Meßrohrs etwa 450 Hz betragen würde.

Nach einer Weiterbildung der Erfindung, führt das Meßrohr 10 ferner, insb. auch in Anlehnung an den in der US-B 68 40 109 gezeigten Meßwandler, im Betrieb zumindest zeitweise, insb. zeitgleich zu den vorgenannten Biegeschwingungen, Torsionsschwingungen um eine mit der Längsachse L bzw. der vorgenannten Biegeschwingungsachse im wesentlichen parallelen Torsionsschwingungsachse aus. Torsionsschwingungsachse, Biegeschwingungsachse wie auch die Längsachse L können, wie bei derartigen Meßwandlern durchaus üblich, im wesentlichen koinzident sein. Für das oben beschriebene Meßrohr 10 würde sich beispielsweise eine niedrigste natürliche Resonanzfrequenz für die Torsionsschwingungen im Bereich von etwa 750 Hz ergeben.

Zum Erzeugen mechanischer Schwingungen des Meßrohrs 10 - seien es nun Biegeschwingungen und/oder Torsionsschwingungen - umfaßt der Meßwandler weiters eine, insb. elektrodynamische, Erregeranordnung 40. Diese dient dazu, eine mittels der Betriebs- und Auswerte-Elektronik inform eines entsprechend konditionierten elektrischen Treibersignals, z.B. mit einem geregelten Strom und/oder einer geregelten Spannung, eingespeiste elektrische Erregerenergie *E_{exc}* in eine auf das Meßrohr 10, z.B. pulsförmig, getaktet oder harmonisch, einwirkende und dieses in der vorbeschriebenen Weise elastisch verformende Erregerkraft *F_{exc}* umzuwandeln. Die Erregerkraft *F_{exc}*kann hierbei, wie in Fig. 4 schematisch dargestellt, bidirektional oder aber auch unidirektional ausgebildet sein und in der dem Fachmann bekannten Weise z.B. mittels einer Strom- und/oder Spannungs-Regelschaltung, hinsichtlich ihrer Amplitude und, z.B. mittels einer Phasen-Regelschleife, hinsichtlich ihrer Frequenz eingestellt werden.

Im besonderen ist die Erregranordnung, wie bei derartigen Meßwandlern durchaus üblich, ferner so ausgebildet und im Meßwandler angeordnet, daß sie im wesentlichen mittig an das Meßrohr angreift und/oder zumindest punktuell entlang einer gedachten mittigen Umfangslinie des Meßrohrs außen an diesem fixiert ist.

Als Erregeranordnung kann z.B. eine einfache differentiell auf Meßrohr 10 und Gegenschwinger 20 einwirkende, elektrodynamische Tauchspulenanordnung mit einer am Gegenschwinger 20 befestigten zylindrischen Erregerspule, die im Betrieb von einem entsprechenden Erregerstrom durchflossen ist, und mit einem in die Erregerspule zumindest teilweise eintauchenden dauermagnetischen Anker, der von außen, insb. mittig, am Meßrohr 10 fixiert ist, dienen. Alternativ dazu kann die Erregeranordnung 40 z.B. auch als ein Elektromagnet oder auch als ein seismischer Erreger realisiert sein.

Zum Detektieren von Schwingungen des Meßrohr 10 kann z.B. eine für derartige Meßwandler übliche Sensoranordnung verwendet werden, bei der in der dem Fachmann bekannten Weise mittels eines einlaßseitigen, von der ersten Kopplungszone 11# beabstandet am Meßrohr 10 plazierten ersten Schwingungssensors 50A und mittels eines auslaßseitigen, von der zweiten Kopplungszone 12# beabstandet am Meßrohr 10 plazierten, insb. zum Schwingungssensor 50A im wesentlichen baugleichen, zweiten Schwingungssensors 50B die Bewegungen des Meßrohrs 10 erfaßt und in ein entsprechendes erstes bzw. zweites Sensorsignal S₁, S₂ umgewandelt werden. Als Sensoren 50A, 50B können z.B. die Schwingungen relativ zum Gegenschwinger, z.B. differentiell messende, elektrodynamische Geschwindigkeitssensoren oder aber elektrodynamische Wegsensoren oder Beschleunigungssensoren verwendet werden. Anstelle elektrodynamischer Sensoranordnungen oder in Ergänzung derselben können ferner auch mittels resistiver oder piezo-elektrischer Dehnungsmeßstreifen messende oder opto-elektronische Sensoren zum Detektieren der Schwingungen des Meßrohrs 10 dienen.

Nach einer weiteren Ausgestaltung der Erfindung ist die Erregeranordnung 40, wie beispielsweise auch in Fig. 2 oder Fig. 3 schematisch dargestellt, so ausgebildet und so im Meßwandler angeordnet sein, daß sie im Betrieb gleichzeitig, insb. differentiell, auf Meßrohr 10 und Gegenschwinger 20 wirkt.

Im hier gezeigten Ausführungsbeispiel weist die Erregeranordnung 40 dazu wenigstens eine im Betrieb zumindest zeitweise vom Erregerstrom oder einem Erregerteilstrom durchflossene erste Erregerspule 41a auf, die an einem mit dem Meßrohr 10 verbundenen Hebel 41c fixiert ist und über diesen und einen von außen am Gegenschwinger 20 fixierten Anker 41b differentiell auf das Meßrohr 10 und den Gegenschwinger 20 einwirkt. Diese Anordnung hat u.a. auch den Vorteil, daß einerseits der Gegenschwinger 20 und somit auch das Wandlergehäuse 100 im Querschnitt klein gehalten und trotzdem die Erregerspule 41a, insb. auch bei der Montage, leicht zugänglich ist. Darüber hinaus besteht ein weiterer Vorteil dieser Ausgestaltung der Erregeranordnung 40 auch darin, daß allfällig verwendete, insb. bei Nennweiten von über 50 mm nicht mehr vernachlässigbar schwere, Spulenbecher 41d ebenfalls am Gegenschwinger 20 fixierbar sind und somit praktisch keinen Einfluß auf die Resonanzfrequenzen des Meßrohrs 10 haben. Es sei jedoch an dieser Stelle darauf hingewiesen, daß falls erforderlich, die Erregerspule 41a auch vom Gegenschwinger 20 und dementsprechend der Anker 41b vom Meßrohr 10 gehaltert sein können. Alternativ oder in Ergänzung zur differentiell wirkenden Erregeranordnung 40 kann auch die Sensoranordnung 50 so ausgelegt und im Meßwandler angeordnet sein, daß durch sie die Vibrationen von Meßrohr 10 und Gegenschwinger 20 differentiell erfaßt werden.

Im hier gezeigten Ausführungsbeispiel umfaßt die Sensoranordnung 50 eine am Meßrohr 10 fixierte Sensorspule 51a. Die Sensorspule 51a ist möglichst nah zu einem am Gegenschwinger 20 fixierten Anker 51b angeordnet und mit diesem magnetisch so gekoppelt, daß in der Sensorspule eine veränderliche Meßspannung induziert wird, die durch einen relativen Abstand zwischen Sensorspule und Anker verändernde laterale Relativbewegungen zwischen Meßrohr 10 und Gegenschwinger 20 und/oder eine relative Lage der Sensorspule bezüglich des Ankers verändernde rotatorische Relativbewegungen zwischen Meßrohr 10 und Gegenschwinger 20 beeinflußt ist. Falls erforderlich können die Sensorspule 51a dazu aber auch am Gegenschwinger 20 und in entsprechender Weise der mit dieser gekoppelte Anker 51b am Meßrohr 10 fixiert sein.

Gemäß einer weiteren Ausgestaltung der Erfindung ist ferner vorgesehen, Schwingungserreger und Schwingungssensoren nach dem gleichen Wirkprinzip aufzubauen, insb. im wesentlichen einander baugleich auszubilden. Desweiteren ist auch möglich, Spule und/oder Anker von Erreger- und/oder Sensoranordnung unter Verzicht auf einen vermittelnden Hebel jeweils direkt am Meßrohr oder am Gegenschwinger zu befestigen.

Gemäß einer weiteren Ausgestaltung der Erfindung sind Meßrohr 10, Gegenschwinger 20 sowie die daran befestigten Sensor- und Erregeranordnungen 40, 50 hinsichtlich ihrer Massenverteilung ferner so aufeinander abgestimmt, daß das so gebildete, mittels des Ein- und am Auslaßrohrstücks 11, 12 aufgehängte Innenteil des Meßwandlers einen Massenschwerpunkt MS aufweist, der zumindest innerhalb des Meßrohrs 10, bevorzugt aber möglichst nah an der Meßrohrlängsachse L liegt. Zudem ist das Innenteil ferner so ausgebildet, daß es eine mit dem Einlaßrohrstück 11 und dem Auslaßrohrstück 12 fluchtende und zumindest abschnittsweise innerhalb des Meßrohrs 10 liegende erste Trägheitshauptachse T₁ aufweist. Infolge der Positionierung des Massenschwerpunktes MS des Innenteils, insb. aber auch aufgrund der vorbeschriebenen Lage der ersten Trägheitshauptachse T₁ können die Torsionsschwingungen und die Biegeschwingungen des Meßrohrs 10 zumindest im Nutzmode mechanisch voneinander weitestgehend entkoppelt werden.

Das Innenteil Meßwandlers ist gemäß einer weiteren Ausgestaltung der Erfindung derart ausgestaltet, daß eine erste Trägheitshauptachse T₁ davon mit der oben Längsachse L im wesentlichen koinzidiert. Ferner ist gemäß einer weiteren Ausgestaltung der Erfindung das Innenteil des Meßwandlers derart ausgestaltet, daß eine zweite Trägheitshauptachse T₂ davon im wesentlichen mit der oben erwähnten Mittelachse zusammenfällt.

Das mittels des Meßrohrs 10, des Gegenschwingers 20, des Einlaßrohrstücks 11 sowie des Auslaßrohrstücks 12 gebildete Innenteil des Meßwandlers ist, wie aus einer Zusammenschau von Fig. 1 und 2 ersichtlich, ferner in einem selbiges Innenteil mediumsdicht und weitgehend druckfest umhüllendes Wandlergehäuse 30 schwingfähig gehaltert, das am jeweils von den Kopplungszonen entfernten Ende des Ein- und Auslaßrohrstück 11, 12 entsprechend fixiert ist. Für den Fall, daß der Meßwandler lösbaren mit der Rohrleitung zu montieren ist, ist dem Einlaßrohrstück 11 und dem Auslaßrohrstück 12 jeweils ein erster bzw. zweiter Flansch 13, 14 entsprechend angeformt. Die Flansche 13, 14 können dabei gleichzeitig auch als integraler Bestandteil des Wandlergehäuses 30 ausgebildet sein. Falls erforderlich können Ein- und Auslaßrohrstück 11, 12 aber auch direkt mit der Rohrleitung, z.B. mittels Schweißen oder Hartlötung, verbunden werden.

Zum Anschließen der Erregeranordnung wie auch der Sensoranordnung an die erwähnte Betriebs- und Auswerte-Elektronik des In-Line-Meßgeräts sind des weiteren entsprechende Anschlußleitungen vorgesehen, die zumindest abschnittsweise innerhalb des Wandlergehäuses geführt sind. Die Anschlußleitungen können dabei zumindest anteilig als elektrische, zumindest abschnittsweise in von einer elektrischen Isolierung umhüllte Leitungsdrähte ausgebildet sein, z.B. inform von "Twisted-pair"-Leitungen, Flachbandkabeln und/oder Koaxialkabeln. Alternativ oder in Ergänzung dazu können die Anschlußleitungen zumindest abschnittsweise auch mittels Leiterbahnen einer, insb. flexiblen, gegebenenfalls lackierten Leiterplatte gebildet sein.

Gemäß einer weiteren Ausgestaltung der Erfindung umfaßt der erfindungsgemäße Meßwandler, wie auch aus der Zusammenschau der Fign. 2 und 5a bis 5d ersichtlich, zur weiteren Verbesserung der Meßgenauigkeit und in Anlehnung an die in den eingangs erwähnten US-A 2007/0186685, US-A 2007/0119265, US-A 2007/0119264, US-B 66 91 583, oder US-B 68 40 109 vorgeschlagenen Meßwandler ferner einen im Bereich der ersten Kopplungszone mit dem Einlaßrohrstück 11 und dem Meßrohr 10 gekoppelten ersten Ausleger 15, der-wie in Fig. 3a schematisch dargestellt - einen im Bereich des Einlaßrohrstücks 11 liegenden Massenschwerpunkt M₁₅ aufweist, sowie einen im Bereich der zweiten Kopplungszone mit dem Auslaßrohrstück 12 und dem Meßrohr 10 gekoppelten zweiten Ausleger 16, der-wie ebenfalls in Fig. 5a schematisch dargestellt - einen im Bereich des Auslaßrohrstücks 12 liegenden Massenschwerpunkt M₁₆ aufweist. Anders gesagt, sind die beiden, insb. im wesentlichen baugleichen, ggf. sogar einander identischen, Ausleger 15, 16 so im Meßwandler angeordnet, daß der jeweilige Masseschwerpunkt M₁₅, M₁₆ vom Meßrohr 10, insb. in dessen Flucht liegend, beabstandet ist. Die beiden Ausleger 15, 16 sind also insoweit exzentrisch am Ein- bzw. Auslaßrohrstück und entsprechend exzentrisch auch an Meßrohr 10 und Gegenschwinger 20 gehaltert. Die Wirkungsweise des so gebildeten Innenteils entspricht dabei der in den erwähnten US-A 2007/0186685, US-A 2007/0119265, US-A 2007/0119264, US-B 66 91 583, oder US-B 68 40 109 gezeigten Innenteile.

Um eine möglichst einfache, kostengünstige Fertigung der Ausleger wie schließlich des Meßwandlers zu ermöglichen, kann jeder der beiden Ausleger 15, 16 beispielsweise im wesentlichen röhrenförmig oder hülsenförmig ausgebildet sein, so daß er praktisch mittels einer auf den Gegenschwinger 20 aufgeschobenen, insb. metallische, Hülse gebildet werden kann, insb. auch dann, wenn der Gegenschwinger 20 bereits mit dem Meßrohr 10 verbunden worden ist. Gemäß einer Weiterbildung dessen weist jeder der dabei den jeweiligen Ausleger 15, 16 bildenden Hülsen jeweils wenigstens eine Ringnut auf, vgl. auch hiefür die erwähnten US-A 2007/0186685, US-A 2007/0119264 oder US-A 2007/0119265.

Zur Herstellung von Meßrohr, Ein- und Auslaßrohrstück, Gegenschwinger sowie den gegebenenfalls vorgesehenen Auslegern kann im übrigen praktisch jedes der für solche Meßwandler üblichen Materialien, wie z.B. Stahl, Titan, Tantal, Zirkonium etc., oder auch entsprechende Kombinationen dieser Materialien verwendet werden. Beispielsweise hat sich die Verwendung von Titan für das Meßrohr 10 sowie das Einlaßrohrstück 11 und das Auslaßrohrstück 12 als besonders geeignet gezeigt, während, beispielsweise aus Gründen der Kostenersparnis, sowohl für den Gegenschwinger 20 sowie die gegebenenfalls vorgesehenen Ausleger 15, 16 als auch für das Wandlergehäuse 30 die Verwendung von Stahl durchaus von Vorteil ist.

Wie bereits erwähnt, besteht bei Meßwandlern der vorgenannten Art, insb. bei solchen mit einem geraden Meßrohr ein besonderes Problem darin, daß der Meßwandler nicht nur natürliche Schwingungsmoden sowohl in der gedachten Primär-Schwingungsebene XZ als auch in der dazu orthogonalen gedachten Sekundär-Schwingungsebene YZ aufweisen kann, sondern daß zudem auch zumindest einige der Schwingungsmoden in der Sekundär-Schwingungsebene YZ eine solche natürliche Resonanzfrequenz aufweisen können, die im wesentlichen gleich mit einer natürlichen Resonanzfrequenz eines insoweit korrespondierenden Schwingungsmode in der Primär-Schwingungsebene XZ sein kann. Solche miteinander korrespondierenden Schwingungsmoden können zudem auch jeweils Schwingungsformen von gleicher Ordnung, also jeweils gleicher Anzahl Schwingungsknoten, aufweisen.

Dem Rechnung tragend ist beim erfindungsgemäßen Meßwandler daher ferner ein erstes Federelement 61 und ein zweites Federelement 62 vorgesehen. Ein jedes der wenigstens zwei, beispielsweise im wesentlichen baugleich ausgebildeten, Federelemente ist dabei - wie auch in den Fig. 6a bis 8b schematisch dargestellt - mit einem jeweiligen meßrohrseitigen ersten Ende am Meßrohr 10 und mit einem jeweiligen gegenschwingerseitigen zweiten Ende am Gegenschwinger 20 fixiert, beispielsweise jeweils in gleichem Abstand zur Mitte des Meßrohrs. Die Federelemente sind erfindungsgemäß dabei so im Meßwandler angeordnet, daß jedes der beiden Federelement 61, 62 jeweils sowohl von jeder der beiden Kopplungszonen 11#, 12# als auch von der Erregeranordnung 40 beabstandet mit Meßrohr und Gegenschwinger verankert und insoweit von den beiden Kopplungszonen 11#, 12# und von der Erregeranordnung 40 beabstandet auf Meßrohr und Gegenschwinger einwirkt. Vorzugsweise ist das erste Federelement 61 dabei vom zweiten Federelement 62 beabstandet an Meßrohr und Gegenschwinger fixiert, so daß also sowohl die meßrohrseitigen Enden als auch die gegenschwingerseitigen Enden der beiden Federelemente 61, 62 jeweils voneinander beabstandet sind.

Im besonderen ist ferner vorgesehen, die Federelemente 61, 62 jeweils mit dem meßrohrseitigen ersten Ende unter Bildung jeweils einer im wesentlichen starren und/oder im wesentlichen spielfreien Lagerung am Meßrohr und mit dem gegenschwingerseitigen zweiten Ende unter Bildung jeweils einer im wesentlichen starren und/oder im wesentlichen spielfreien Lagerung am Gegenschwinger zu fixieren.

Hinsichtlich der tatsächlichen Positionierung innerhalb des Meßwandlers wie auch der Anzahl der letztlich verwendeten Federelemente ergeben sich nunmehr verschiedene Gestaltungsmöglichkeiten und Varianten, von denen einige ausgewählte nachfolgend näher erläutert werden.

Gemäß der Erfindung ist, wie auch in den Fign. 6a, 7a und 8a jeweils schematisch dargestellt, das erste Federelement in einem zwischen der ersten Kopplungszone 11# und dem wenigstens einen Schwingungserreger liegenden einlaßseitigen Bereich an Meßrohr und Gegenschwinger fixiert. Diese Ausgestaltung weiterbildend ist ferner vorgesehen, das zweite Federelement in einem zwischen der zweiten Kopplungszone 12# und dem wenigstens einen Schwingungserreger liegenden auslaßseitigen Bereich an Meßrohr und Gegenschwinger zu fixieren.

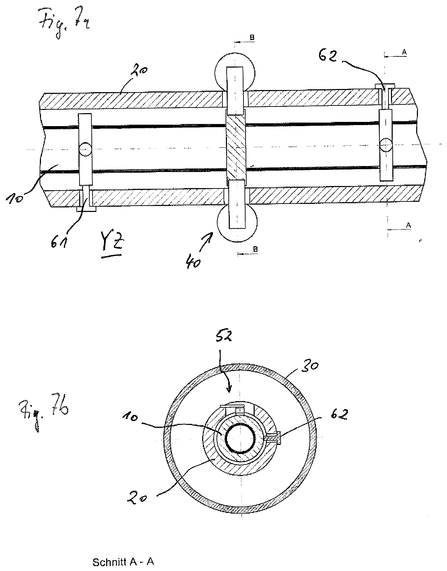

Gemäß einer weiteren Ausgestaltung der Erfindung ist ferner vorgesehen, die Federelement 61, 62, wie auch aus der Zusammenschau von Fig. 7a und 7b ersichtlich, so im Meßwandler anzuordnen, das daß erste Federelement 61 entlang einer parallel zur Längsachse L verlaufenden gedachten Seitenlinie des Meßrohrs 10 an selbigem fixiert, die einer zu dieser gleichfalls parallelen gedachten Seitenlinie des Meßrohrs 10, entlang der das zweite Federelement 62 mit seinem meßrohrseitigen Ende am Meßrohr fixiert ist, im wesentlichen diametral gegenüberliegt. Im besonderen ist hierbei ferner vorgesehen, daß die beiden Federelemente 61, 62 zudem auch punktsymmetrisch bezüglich eines Schwerpunkts des Meßrohrs 10 oder auch des erwähnten Massenschwerpunkt MS des Meßwandlers in selbigen angeordnet sind. Anders gesagt sollen die meßrohrseitigen Enden der beiden Federelemente 61, 62 in vorteilhafter Weise auf einer gemeinsamen durch den Schwerpunkt hindurchlaufenden gedachten Diagonale des Meßwandlers liegen; gleichermaßen liegen dann auch die gegenschwingerseitigen Enden der beiden Federelemente 61, 62 auf einer gemeinsamen weiteren, ebenfalls durch den Schwerpunkt hindurchlaufenden gedachten Diagonale des Meßwandlers. Diese Anordnung der Federelemente hat u.a. den Vorteil, daß damit nicht nur sehr effektiv Frequenzenverschiebungen zwischen Resonanzfrequenzen korrespondierender Schwingungsmoden in der Primär- und Sekundärschwingungsebene erzielt werden können, sondern zudem auch zusätzlich auf sehr einfache Weise eine zusätzliche Frequenzenverschiebung zwischen den Resonanzfrequenzen der erwähnten Torsionsschwingungen des Meßrohr sowie denen der Lateralschwingungen, insb. denen in der Primär-Schwingungsebene, realisiert werden kann, ohne dadurch die Anregung der Torsionsschwingungen als solche signifikant zu behindern.

Gemäß der Erfindung sind die wenigstens zwei Federelement 61, 62 so ausgebildet und so im Meßwandler angeordnet, daß mittels der beiden Federelemente eine niedrigste Eigenfrequenz des oben erwähnten ersten natürlichen Schwingungsmodes in der gedachten Primär-Schwingungsebene kleiner eingestellt ist, als eine niedrigste Eigenfrequenz des zweiten natürlichen Schwingungsmodes in der gedachten Sekundär-Schwingungsebene. Im besonderen ist hierbei ferner vorgesehen, den Meßwandler so auszubilden, daß ein Frequenzabstand zwischen der niedrigsten Eigenfrequenz des ersten natürlichen Schwingungsmodes und der niedrigsten Eigenfrequenz des zweiten natürlichen Schwingungsmodes größer als 50 Hz, insb. größer als 100 Hz, eingestellt ist.

Alternativ oder in Kombination hierzu ist gemäß der Erfindung ferner vorgesehen, daß jedes der beiden Federelemente 61, 62 eine Federsteifigkeit aufweist, von der jeweils eine Biegeschwingungen des Meßrohrs in der Primär-Schwingungsebene XZ hemmende Primärkomponente verschieden ist von einer Biegeschwingungen des Meßrohr in der Sekundär-Schwingungsebene YZ hemmende Sekundärkomponente. Im besonderen ist dabei vorgesehen, daß jedes der beiden Federelemente 61, 62 so ausgebildet und so im Meßwandler angeordnet ist, daß die Primärkomponente von dessen Federsteifigkeit jeweils kleiner ist als die zugehörige Sekundärkomponente.

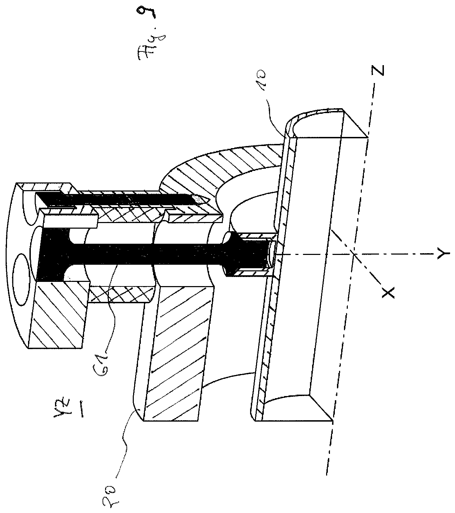

Der vorgenannten Unterschied zwischen Primär- und zugehöriger Sekundärkomponente kann für das jeweilige Federelement beispielsweise auf einfach Weise dadurch erzielt werden, daß - wie beispielsweise aus der Zusammenschau der Fign. 6a und b ersichtlich oder wie in Fig. 9 anhand des ersten Federelements 61 exemplarisch gezeigt - ein jedes der Federelemente jeweils als ein länglicher Körper, wie etwa eine Stange, eine Spiralfeder, eine Blattfeder oder dergleichen, ausgebildet und jeweils so im Meßwandler angeordnet ist, daß es im Betrieb infolge von Biegeschwingungen des Meßrohrs 10 in der Primär-Schwingungsebene zu einer beide jeweiligen Federelement-Enden imaginär verbindende Längsachse nach Art einer beidendig eingespannten Saite transversal ausgebogen wird.

Gemäß einer weiteren vorteilhaften Ausgestaltung ist dementsprechend jedes der, insb. baugleichen, Federelemente jeweils mittels einer, insb. metallischen, Stange gebildet. Die Verwendung einer metallischen Stange als Federelement hat, abgesehen von einem dadurch vergleichsweise einfachen, gleichwohl sehr robusten Aufbau der Federelemente, bei gleichzeitig sehr guter Federwirkung, im besonderen den Vorteil, daß bei der Fertigung ohne weiteres auch auf standardisierte, insoweit auch kostengünstige Massenware zurückgegriffen werden kann.

Ferner sind die Federelemente gemäß einer weiteren Ausgestaltung der Erfindung so im Meßwandler angeordnet, daß jedes der als länglicher Körper ausgebildeten, insb. stangen- oder stabförmigen, Federelemente sich im wesentlichen in radialer Richtung zu Meßrohr und/oder Gegenschwinger erstreckt. Alternativ dazu kann es aber durchaus auch von Vorteil sein, besonders bei in erheblichem Maße schwankender Betriebstemperatur und damit einhergehenden, durch thermisch bedingte Dehnungen in radialer Richtung verursachte Änderungen des relativen Abstands zwischen Meßrohr und Gegenschwinger, wenn selbiges stabförmiges Federelement gegenüber dem Meßrohr 10 bzw. dessen Längsachse L geneigt und/oder leicht gebogen und somit radial geringfügig nachgiebig ist.

Nach einer anderen Ausgestaltung der Erfindung sind die beiden Federelemente so im Meßwandler plaziert, daß jedes der beiden Federelemente in einer durch den einlaßseitigen Bereich und den auslaßseitigen Bereich imaginär verlaufenden geraden Schnittebene des Meßrohrs angeordnet ist. Alternativ oder in Ergänzung dazu ist ferner vorgesehen, daß jedes der beiden, beispielsweise stab- oder stangenförmig ausgebildeten, Federelemente anteilig an gedachten Schnittpunkten des Meßrohrs mit der gedachten Sekundär-Schwingungsebene YZ gelagert ist. Ferner ist vorgesehen, daß jedes der beiden Federelemente anteilig an gedachten Schnittpunkten des Gegenschwingers mit der Sekundär-Schwingungsebene YZ gelagert ist. Für den Fall, daß die Federelemente jeweils als im wesentlichen länglicher Körper ausgebildet sind und einerseits jeweils an gedachten Schnittpunkten des Meßrohrs mit der gedachten Sekundär-Schwingungsebene und anderseits jeweils an gedachten Schnittpunkten des Gegenschwingers mit der Sekundär-Schwingungsebene YZ gelagert sind, sind beide vorzugsweise so im Meßwandler angeordnet, daß sie effektiv innerhalb der Sekundär-Schwingungsebene YZ liegen.

Nach einer weiteren Ausgestaltung der Erfindung sind die Federelemente ferner so im Meßwandler angeordnet, daß das erste Federelement zumindest in der Nähe einer einlaßseitigen Umfangslinie des Meßrohrs an letzterem fixiert ist, entlang der der erwähnte erste Schwingungssensorhier einlaßseitige - Bewegungen des Meßrohrs effektiv erfaßt, und daß das zweite Federelement zumindest in der Nähe einer auslaßseitigen Umfangslinie des Meßrohrs an letzterem fixiert ist, entlang der der erwähnte zweite Schwingungssensor - hier auslaßseitige - Bewegungen des Meßrohrs effektiv erfaßt. Diese Ausgestaltung weiter optimierend sind die Federelement ferner so im Meßwandler angeordnet, daß das erste Federelement und der erwähnte erste Schwingungssensor jeweils anteilig entlang wenigstens der insoweit gemeinsamen einlaßseitigen Umfangslinie des Meßrohrs an letzterem fixiert sind, und daß das zweite Federelement und der erwähnte zweite Schwingungssensor jeweils anteilig entlang wenigstens der insoweit gemeinsamen auslaßseitigen Umfangslinie des Meßrohrs an diesem fixiert sind. Dies ist insoweit von besonderem Vorteil, als unerwünschte Meßrohr-Schwingungen in der Sekundär-Schwingungsebene zumindest am jeweiligen Schwingungssensor so äußerst wirksam unterdrückt, im Falle stab- oder stangenförmig ausgebildeter Federelemente sogar nahezu vollständig verhindert werden können. Infolgedessen kann auf sehr einfache, gleichwohl sehr effektive Weise ein Einkoppeln, z.B. auch von außen in den Meßwandler eingebrachten, in der Sekundär-Schwingungsebene wirkende, mechanischer Störungen in die von den Schwingungssensoren gelieferte Schwingungssignalen nahezu vollständig und sicher vemieden werden. Dies ermöglicht beispielsweise auch die Verwendung von solchen Schwingungssensoren, denen eine gewisse Querempfindlichkeit auf Schwingungen innerhalb der Sekundär-Schwingungsebene innewohnt, und die aufgrund ihres insoweit vergleichsweise einfacheren Aufbaus kostengünstiger hergestellt sein können.

Gemäß einer weiteren Ausgestaltung ist ferner vorgesehen, die Federelemente entlang einer sich bei in der Primär-Schwingungsebene biegeschwingendem Meßrohr im wesentlichen nicht verzerrenden neutralen Faser des Meßrohrs an selbigem zu fixieren. Für den oben beschrieben Fall, daß auch der Gegenschwinger im Betrieb zumindest zeitweise Biegeschwingungen um die Biegeschwingungsachse ausführt, ist ferner vorgesehen, daß die Federelemente entlang einer sich bei biegeschwingendem Gegenschwinger im wesentlichen nicht verzerrenden neutralen Faser des Gegenschwingers an selbigem fixiert sind. Die Befestigung der Federelemente entlang der neutralen Fasern von Meßrohr und Gegenschwinger kann beispielsweise auch erreicht werden, daß eine die Torsionsschwingungen des Meßrohrs um die mit der Biegeschwingungsachse im wesentlichen koinzidente Torsionsschwingungsachse effektiv hemmende Federsteifigkeit der Federelemente minimiert ist und somit nur einen geringen Einfluß auf das Verhalten des Meßwandlers bei torsionsschwingendem Meßrohr hat.

Weitere Beispiele für geeignete konstruktive Ausgestaltungen der Federelemente und/oder deren Anordnung relativ zu Primär- und Sekundär-Schwingungsebene sind im übrigen auch in den eingangs erwähnten US-A 52 91 792 oder US-B 70 77 014 oder auch in der US-A 48 23 614 gezeigt.

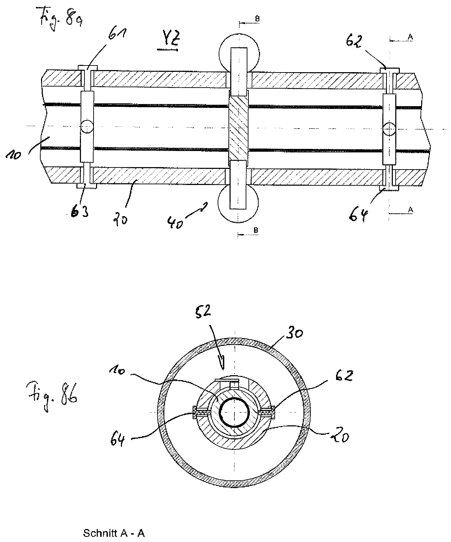

Nach einer Weiterbildung der Erfindung umfaßt der Meßwandler, wie auch in der Fig. 8a schematisch dargestellt, ferner ein zusätzliches drittes Federelement 63 sowie ein viertes Federelement 64. Die, beispielsweise wiederum im wesentlichen baugleichen, Federelemente sind auch hierbei wiederum so im Meßwandler angeordnet, daß jedes der nunmehr vier Federelemente 61, 62, 63, 64 - wie auch aus der Zusammenschau von Fig. 2 und Fig. 8a ersichtlich -jeweils sowohl von den Kopplungszonen 11#, 12# als auch von der Erregeranordnung 40 beabstandet an Meßrohr 10 und Gegenschwinger 20 fixiert ist. Im besonderen sind die Federelemente 61, 62, 63, 64 dabei ferner so im Meßwandler angeordnet, daß jedes der vier Federelemente zudem jeweils von jedem der jeweiligen anderen drei Federelementen beabstandet ist. Im besondern sind die Federelemente dabei so angeordnet, daß - wie aus der Zusammenschau der Fig. 8a und 8b ohne weiteres ersichtlich - paarweise zusammengehörige Federelemente, hier also das erste und dritte Federelement 61, 63 einerseits und das zweite und vierte Federelement 62, 64 anderseits, jeweils im wesentlichen einander diametral gegenüberliegen.

Wie sich aus den vorangegangenen Erläuterungen unschwer erkennen läßt, zeichnet sich der erfindungsgemäße Meßwandler durch eine Vielzahl von Einstellmöglichkeiten aus, die es dem Fachmann in Kenntnis der vorliegenden Erfindung ermöglichen, eine Trennung von Resonanzfrequenzen ausgewählter Schwingungsmoden des Meßrohrs in der Primär- und der Sekundär-Schwingungsebene mit einer hohen Güte zu erzielen, insb. auch noch nach einer Spezifikation von äußeren oder inneren Einbaumaßen des Meßwandlers. Die für die tatsächliche Realisierung im einzelnen einzustellenden Parameter für die erforderlichen Steifigkeit der Federelemente wie auch deren jeweilige optimale Positionierung im Meßwandler können dabei ohne weiteres an die durch die für das Meßrohr 10 tatsächlich vorgesehene Nennweite DN wie auch die für das Meßrohr vorgesehene Einbaulänge entsprechend angepaßt werden. Der erfindungsgemäße Meßwandler ist dabei sowohl für Meßrohre mit eher kleineren Nennweiten DN im Bereich von kleiner als 40 mm als auch im besonderen für die Einsatz in Rohrleitung mit einem Kalibier von mehr als 50 mm und damit einhergehend auch für Meßrohre mit Nennweiten von wesentlich größer als 40 mm gut geeignet.

## Patentansprüche

1. Meßwandler vom Vibrationstyp für ein in einer Rohrleitung strömendes Medium, welcher Meßwandler umfaßt:
- ein, insb. über ein einlaßseitig einmündendes Einlaßrohrstück (11) und über ein auslaßseitig einmündendes Auslaßrohrstück (12) mit der Rohrleitung kommunizierendes, zumindest zeitweise vibrierendes Meßrohr (10) zum Führen von zu messendem Medium;
- einen Gegenschwinger (20), der unter Bildung einer ersten Kopplungszone (11#) einlaßseitig am Meßrohr fixiert ist und der unter Bildung einer zweiten Kopplungszone (12#) auslaßseitig am Meßrohr (10) fixiert ist;
- eine, insb. im wesentlichen mittig an das Meßrohr (10) angreifende und/oder zumindest punktuell entlang einer gedachten mittigen Umfangslinie des Meßrohrs (10) außen an diesem fixierte, Erregeranordnung (40) zum Antreiben zumindest des Meßrohrs (10), welche Erregeranordnung (40) wenigstens einen, insb. einzigen und/oder mittels einer Spule gebildeten, Schwingungserreger umfaßt;
- eine Sensoranordnung (50) zum Erfassen von Schwingungen zumindest des Meßrohrs (10), welche Sensoranordnung einen einlaßseitigen, mittels einer Spule gebildeten ersten Schwingungssensor sowie einen auslaßseitigen, mittels einer Spule gebildeten zweiten Schwingungssensor umfaßt;
- ein erstes Federelement (61) und ein zweites Federelement (62; 63; 64), wobei jedes der wenigstens zwei Federelemente (61; 62; 63; 64) sowohl von jeder der beiden Kopplungszonen (11#, 12#) als auch der Erregeranordnung (40) beabstandet an Meßrohr (10) und Gegenschwinger (20) fixiert ist, derart, daß das erste Federelement, in einem zwischen der ersten Kopplungszone (11#) und dem wenigstens einen Schwingungserreger liegenden einlaßseitigen Bereich an Meßrohr und Gegenschwinger fixiert ist; sowie
- ein Wandlergehäuse (30);
- wobei der Meßwandler wenigstens einen ersten natürlichen Schwingungsmode, in dem zumindest das Meßrohr Biegeschwingungen in einer gedachten Primär-Schwingungsebene (XZ) ausführen kann, und einen zweiten natürlichen Schwingungsmode, in dem zumindest das Meßrohr Biegeschwingungen in einer gedachten, zur gedachten Primär-Schwingungsebene (XZ) im wesentlichen orthogonalen Sekundär-Schwingungsebene (YZ) ausführen kann, aufweist, und wobei das Meßrohr im Betrieb zumindest zeitweise und/oder zumindest anteilig Biegeschwingungen um eine gedachte Biegeschwingungsachse ausführt, die die beiden Kopplungszonen (11#, 12#) imaginär miteinander verbindet, und
- wobei mittels der beiden Federelemente eine niedrigste Eigenfrequenz des ersten natürlichen Schwingungsmodes kleiner eingestellt ist, als eine niedrigste Eigenfrequenz des zweiten natürlichen Schwingungsmodes, insb. derart, daß ein Frequenzabstand zwischen der niedrigsten Eigenfrequenz des ersten natürlichen Schwingungsmodes und der niedrigsten Eigenfrequenz des zweiten natürlichen Schwingungsmodes größer als 50 Hz eingestellt ist; und/oder jedes der beiden Federelemente eine Federsteifigkeit aufweist, von der jeweils eine Biegeschwingungen des Meßrohrs in der Primär-Schwingungsebene (XZ) hemmende Primärkomponente verschieden ist von einer Biegeschwingungen des Meßrohr in der Sekundär-Schwingungsebene (YZ) hemmende Sekundärkomponente, insb. derart, daß jedes der beiden Federelemente so ausgebildet und im Meßwandler angeordnet ist, daß die Primärkomponente von dessen Federsteifigkeit jeweils kleiner ist als die zugehörige Sekundärkomponente.

2. Meßwandler nach einem der vorherigen Ansprüche, wobei das Meßrohr im Betrieb mittels der Erregeranordnung zumindest zeitweise derart angeregt ist, daß es zumindest anteilig, insb. überwiegend oder ausschließlich, in der gedachten Primär-Schwingungsebene oszilliert.

3. Meßwandler nach dem vorherigen Anspruch, wobei die Erregeranordnung (40) im Betrieb zumindest zeitweise von einem elektrischen Treibersignal gespeist ist.

4. Meßwandler nach einem der vorherigen Ansprüche, wobei das erste Federelement vom zweiten Federelement beabstandet an Meßrohr und Gegenschwinger fixiert ist.

5. Meßwandler nach dem vorherigen Anspruch, wobei das zweite Federelement in einem zwischen der zweiten Kopplungszone (12#) und dem wenigstens einen Schwingungserreger liegenden auslaßseitigen Bereich an Meßrohr und Gegenschwinger fixiert ist, insb. derart, daß die beiden Federelemente in einer durch den einlaßseitigen Bereich und den auslaßseitigen Bereich imaginär verlaufenden geraden Schnittebene des Meßrohrs im Meßwandler angeordnet sind.

6. Meßwandler nach einem der vorherigen Ansprüche, wobei die Erregeranordnung wenigsten eine Spule umfaßt.

7. Meßwandler nach dem vorherigen Anspruch, wobei die wenigstens eine Spule der Erregeranordnung mit dem Gegenschwinger mechanisch verbunden, insb. starr gekoppelt, ist.

8. Meßwandler nach dem vorherigen Anspruch, wobei das erste Federelement und der erste Schwingungssensor jeweils anteilig entlang wenigstens einer gemeinsamen einlaßseitigen Umfangslinie des Meßrohrs an diesem fixiert sind, und wobei das zweite Federelement und der zweite Schwingungssensor jeweils anteilig entlang wenigstens einer gemeinsamen auslaßseitigen Umfangslinie des Meßrohrs an diesem fixiert sind.

9. Meßwandler nach einem der vorherigen Ansprüche,
- wobei Meßrohr (10) und Gegenschwinger (20) zueinander im wesentlichen koaxial ausgerichtet sind; und/oder
- wobei das Meßrohr (10) zumindest teilweise vom Gegenschwinger (20) ummantelt ist; und/oder
- wobei der Gegenschwinger (20) im wesentlichen rohrförmig ist; und/oder
- wobei der Gegenschwinger (20) im wesentlichen gerade ist; und/oder
- wobei das Meßrohr (10) sich mit im wesentlichen gleichbleibendem, insb. kreisringförmiger, Querschnitt zwischen den beiden Kopplungszonen (11#, 12#) erstreckt; und/oder
- wobei das Meßrohr (10) im wesentlichen zylindrisch geformt ist; und/oder
- wobei das Meßrohr (10) über ein einlaßseitig einmündendes Einlaßrohrstück (11) und über ein auslaßseitig einmündendes Auslaßrohrstück (12) mit der Rohrleitung kommuniziert, und wobei das Wandlergehäuse (30) am Einlaßrohrstück (11) und am Auslaßrohrstück (12) fixiert ist.

10. Meßwandler nach einem der vorherigen Ansprüche, wobei das Meßrohr (10) im wesentlichen gerade ist.

11. Meßwandler nach dem vorherigen Anspruch,
- wobei auch der Gegenschwinger im Betrieb zumindest zeitweise Biegeschwingungen um die Biegeschwingungsachse ausführt und die Federelemente entlang einer sich bei biegeschwingendem Gegenschwinger im wesentlichen nicht verzerrenden neutralen Faser des Gegenschwingers an selbigem fixiert sind; und/oder
- wobei das Meßrohr im Betrieb zumindest zeitweise Torsionsschwingungen um eine mit der Biegeschwingungsachse im wesentlichen parallelen, insb. koinzidenten, Torsionsschwingungsachse ausführt.

12. Meßwandler nach einem der vorherigen Ansprüche,
- wobei die Federelemente jeweils mit einem meßrohrseitigen ersten Ende, insb. unter Bildung jeweils einer starren und/oder spielfreien Lagerung, am Meßrohr und mit einem gegenschwingerseitigen zweiten Ende, insb. unter Bildung jeweils einer starren und/oder spielfreien Lagerung, am Gegenschwinger fixiert sind; und/oder
- wobei jedes der, insb. baugleichen, Federelemente jeweils mittels einer, insb. sich im wesentlichen in radialer Richtung zu Meßrohr und/oder Gegenschwinger erstreckend im Meßwandler angeordneten und/oder metallischen, Stange gebildet ist; und/oder
- wobei die beiden Federelemente punktsymmetrisch bezüglich eines Schwerpunkts des Meßrohrs im Meßwandler angeordnet sind; und/oder
- wobei jedes der beiden Federelemente anteilig an gedachten Schnittpunkten des Meßrohrs mit der Sekundär-Schwingungsebene (YZ) gelagert ist, insb. derart, daß jedes der beiden Federelemente anteilig auch an gedachten Schnittpunkten des Gegenschwingers mit der Sekundär-Schwingungsebene (YZ) gelagert ist.

13. Meßwandler nach einem der vorherigen Ansprüche, weiters umfassend ein drittes Federelement und ein viertes Federelement, wobei jedes der vier Federelemente von den Kopplungszonen (11#, 12#) und der Erregeranordnung (40) beabstandet an Meßrohr und Gegenschwinger fixiert ist.

14. Meßwandler nach dem vorherigen Anspruch, wobei jedes der vier, insb. baugleichen, Federelemente jeweils von jedem der jeweiligen anderen drei Federelementen beabstandet ist, insb. derart, daß paarweise zusammengehörige einlaßseitige Federelemente (61, 63) jeweils im wesentlichen einander diametral gegenüberliegend am Meßrohr (10) plaziert sind und, wobei paarweise zusammengehörige auslaßseitige Federelemente (62, 64) jeweils im wesentlichen einander diametral gegenüberliegend am Meßrohr (10) plaziert sind.

15. Verwendung eines Meßwandlers gemäß einem der vorherigen Ansprüche in einem In-Line-Meßgerät zum Messen und/oder Überwachen wenigstens eines Parameters, insb. eines Massendurchflusse, m, einer Dichte, *ρ,* und/oder einer Viskosität, *η*, eines in einer Rohrleitung strömenden Mediums, insb. einem Coriolis-Massendurchflußmeßgerät, einem Dichtemeßgerät, oder einem Viskositätsmeßgerät.

## Claims

1. Vibronic-type transducer for a medium flowing through a pipe, said transducer comprising:
- a measuring tube (10) designed to transport the medium to be measured, said tube vibrating at least temporarily and communicating with the pipe via an inlet pipe segment (11) leading into the inlet side and an outlet pipe segment (12) leading into the outlet side;
- a counter-oscillator (20), which is fixed on the measuring tube on the inlet side forming a first coupling zone (11#), and which is fixed on the measuring tube (10) on the outlet side forming a second coupling zone (12#);
- an exciter configuration (40), particularly which essentially engages centrally on the measuring tube (10) and/or is at least fixed at points on the exterior of said measuring tube (10) along an imaginary central perimeter of the measuring tube (10), said exciter configuration (40) designed to excite at least the measuring tube (10), and comprising at least one oscillation exciter, particularly a single oscillation exciter and/or one formed by a coil;
- a sensor arrangement (50) designed to detect vibrations at least of the measuring tube (10), said sensor arrangement comprising a first vibration sensor on the inlet side formed by a coil and a second vibration sensor on the outlet side formed by a coil;
- a first spring element (61) and a second spring element (62, 63, 64), wherein each of the at least two spring elements (61, 62, 63, 64) is fixed on the measuring tube (10) and counter-oscillator (20) at a distance from each of the two coupling zones (11#, 12#) and the exciter configuration (40) in such a way that the first spring element is fixed on the measuring tube and counter-oscillator in an area located on the inlet side located between the first coupling zone (11#) and the at least one oscillation exciter; as well as
- a transducer housing (30);
- wherein the transducer has at least a first natural vibration mode in which at least the measuring tube can perform bending oscillations in an imaginary primary plane of oscillation (XZ), and a second natural vibration mode in which at least the measuring tube can perform bending oscillations in an imaginary secondary plane of oscillation (YZ) which is essentially orthogonal to the imaginary primary plane of oscillation (XZ), and wherein, during operation, the measuring tube at least temporarily and/or at least partially performs bending oscillations around an imaginary axis of bending oscillation which interconnects the two coupling zones (11#, 12#) in an imaginary manner, and
- wherein, using the two spring elements, a lowest natural frequency of the first natural vibration mode is set to be smaller than the lowest natural frequency of the second natural vibration mode, particularly in such a way that a frequency distance between the lowest natural frequency of the first natural vibration mode and the lowest natural frequency of the second natural vibration mode is set to be greater than 50 Hz; and/or each of the two spring elements has a spring stiffness wherein a primary component of said stiffness that inhibits bending oscillations of the measuring tube in the primary plane of oscillation (XZ) is different from a secondary component that inhibits bending oscillations of the measuring tube in the secondary plane of oscillation, particularly in such a way that each of the two spring elements is designed and arranged in the transducer in such a way that, in each case, the primary component of the spring stiffness is less than the corresponding secondary component.

2. Transducer as claimed in one of the previous claims wherein the measuring tube is at least temporarily excited by the exciter configuration during operation in such a way that it oscillates at least partially, particularly primarily or exclusively, in the imaginary primary plane of oscillation.

3. Transducer as claimed in the previous claim, wherein, during operation, the exciter configuration (40) is fed at least partially by an electrical driver signal.

4. Transducer as claimed in one of the previous claims, wherein the first spring element is arranged on the measuring tube and counter-oscillator at a distance from the second spring element.

5. Transducer as claimed in the previous claim, wherein the second spring element is fixed on the measuring tube and counter-oscillator in an outlet-side area located between the second coupling zone (12#) and the at least one oscillation exciter, particularly in such a way that the two spring elements are arranged in the transducer on a straight section plane of the measuring tube running in an imaginary manner between the inlet-side area and the outlet-side area.

6. Transducer as claimed in one of the previous claims, wherein the exciter configuration comprises at least one coil.

7. Transducer as claimed in the previous claim, wherein the at least one coil of the exciter configuration is mechanically connected to the counter-oscillator, particularly in a rigid manner.

8. Transducer as claimed in the previous claim, wherein the first spring element and the first oscillation sensor are each fixed in part on the measuring tube along at least a common inlet-side perimeter of the measuring tube, and wherein the second spring element and the second oscillation sensor are each fixed in part on the measuring tube along at least a common outlet-side perimeter of the measuring tube.

9. Transducer as claimed in one of the previous claims,
- wherein the measuring tube (10) and the counter-oscillator (20) are aligned in an essentially coaxial manner in relation to one another; and/or
- wherein the measuring tube (10) is encased at least in part by the counter-oscillator (20); and/or
- wherein the counter-oscillator (20) is essentially tubular; and/or
- wherein the counter-oscillator (20) is essentially straight; and/or
- wherein the measuring tube (10) extends with an essentially constant, particularly circular, cross-section between the two coupling zones (11#, 12#); and/or
- wherein the measuring tube (10) is essentially cylindrical in shape; and/or
- wherein the measuring tube (10) communicates with the pipe via an inlet pipe segment (11) leading into the inlet side and via an outlet pipe segment (12) leading into the outlet side, and wherein said transducer housing (30) is fixed on the inlet pipe segment (11) and on the outlet pipe segment (12).

10. Transducer as claimed in one of the previous claims, wherein the measuring tube (10) is essentially straight.

11. Transducer as claimed in the previous claim,
- wherein, during operation, the counter-oscillator also at least temporarily performs bending oscillations around the axis of bending oscillation and the spring elements are fixed on the counter-oscillator along an essentially non-distorting neutral fiber of the counter-oscillator when the counter-oscillator performs bending oscillations; and/or
- wherein, during operation, the measuring tube at least temporarily performs torsional oscillations around an axis of torsional oscillation which is essentially parallel to the axis of bending oscillation, particularly coinciding with the axis of bending oscillation.

12. Transducer as claimed in one of the previous claims,
- wherein the spring elements are each fixed on the measuring tube with a first end on the measuring tube side, particularly forming, in each case, a rigid structure and/or a structure free of play, and on the counter-oscillator with a second end on the counter-oscillator side, particularly forming, in each case, a rigid structure and/or a structure free of play; and/or
- wherein each of the spring elements, particularly identical in design, is formed using a rod arranged in the transducer, particularly extending in an essentially radial direction in relation to the measuring tube and/or counter-oscillator, and/or being metallic, and/or
- wherein the two spring elements are arranged in the transducer symmetrically in relation to a center of gravity of the measuring tube; and/or
- wherein each of the two spring elements is mounted in part on imaginary points of intersection of the measuring tube with the secondary plane of oscillation (YZ), particularly in such a way that each of the two spring elements are also mounted in part on imaginary points of intersection of the counter-oscillator with the secondary plane of oscillation (YZ).

13. Transducer as claimed in one of the previous claims, further comprising a third spring element and a fourth spring element, wherein each of the four spring elements is fixed on the measuring tube and counter-oscillator at a distance from the coupling zones (11#, 12#) and the exciter configuration (40).

14. Transducer as claimed in the previous claim, wherein each of the four spring elements, particularly spring elements identical in design, is at a distance from each of the other three spring elements, particularly in such a way that spring elements (61, 63) on the inlet side corresponding to one another as pairs are placed on the measuring tube (10) in a manner in which they are essentially diametrically opposite one another, and wherein spring elements (62, 64) on the outlet side corresponding to one another as pairs are placed on the measuring tube (10) in a manner in which they are essentially diametrically opposite one another.

15. Use of a transducer as claimed in one of the previous claims in an inline measuring device for measuring and/or monitoring at least one parameter, particularly a mass flow, *m*, a density, *ρ*, and/or a viscosity, *η*, of a medium flowing through a pipe, particularly a Coriolis mass flowmeter, a density meter or viscosity meter.

## Revendications

1. Transducteur du type à vibrations pour un produit s'écoulant dans une conduite, lequel transducteur comprend :
- un tube de mesure (10) vibrant au moins temporairement, communiquant avec la conduite par l'intermédiaire d'un élément de tube d'entrée (11) débouchant côté entrée et par l'intermédiaire d'un élément de tube de sortie (12) débouchant côté sortie, lequel tube de mesure est destiné à guider le produit à mesurer ;
- un contre-vibrateur (20) qui, en formant une première zone de couplage (11#), est fixé côté entrée sur le tube de mesure (10) et, en formant une deuxième zone de couplage (12#), est fixé côté sortie sur le tube de mesure (10) ;
- un circuit d'excitation (40) fixé à l'extérieur du tube de mesure (10), notamment pour l'essentiel de façon centrée et/ou au moins ponctuellement le long d'une ligne périphérique du tube de mesure (10), centrale et imaginaire, lequel circuit d'excitation (40) est destiné à exciter en vibrations au moins le tube de mesure (10), lequel circuit d'excitation (40) comprend au moins un excitateur de vibrations, notamment unique et/ou constitué d'une bobine ;
- un circuit capteur (50) destiné à la détection des vibrations au moins du tube de mesure (10), lequel circuit capteur comprend, côté entrée, un premier capteur de vibrations, conçu au moyen d'une bobine, ainsi que, côté sortie, un deuxième capteur de vibrations, conçu au moyen d'une bobine ;
- un premier élément élastique (61) et un deuxième élément élastique (62, 63, 64), chacun des au moins deux éléments élastiques (61, 62, 63, 64) étant fixé sur le tube de mesure (10) et le contre-vibrateur (20), à distance à la fois de chacune des deux zones de couplage (11#, 12#) et du circuit d'excitation (40), de telle sorte que le premier élément élastique est fixé sur le tube de mesure et sur le contre-vibrateur, dans une zone côté entrée située entre la première zone de couplage (11#) et l'au moins un excitateur de vibrations : ainsi que
- un boîtier de transducteur (30) ;
- le transducteur présentant au moins un premier mode de vibration naturel, dans lequel le tube de mesure peut exécuter des vibrations de flexion dans un plan de vibration primaire imaginaire (XZ), et au moins un deuxième mode de vibration naturel, dans lequel le tube de mesure peut exécuter des vibrations de flexion dans un plan de vibration primaire imaginaire (XZ) pour l'essentiel orthogonal au plan de vibration secondaire (YZ), et le tube de mesure exécutant, en fonctionnement, au moins temporairement et/ou au moins partiellement des vibrations de flexion autour d'un axe de vibration de flexion imaginaire, qui relie entre elles les deux zones de couplage (11#, 12#), et
- une fréquence propre minimale du premier mode de vibration naturel étant réglée, au moyen des deux éléments élastiques, à une valeur inférieure à la fréquence propre minimale du deuxième mode de vibration naturel, notamment de telle sorte qu'un écartement entre la fréquence propre minimale du premier mode de vibration naturel et la fréquence propre minimale du deuxième mode de vibration naturel est réglé à une valeur supérieure à 50 Hz ; et/ou chacun des deux éléments élastiques présentant une rigidité élastique, éléments par rapport auxquels une composante primaire inhibant les vibrations de flexion du tube de mesure dans le plan de vibration primaire (XZ) est différente d'une composante secondaire inhibant les vibrations de flexion du tube de mesure dans le plan de vibration secondaire (YZ), notamment de telle sorte que chacun des deux éléments élastiques est conçu et disposé dans le transducteur de telle manière que la composante primaire de sa rigidité élastique est respectivement inférieure à la composante secondaire correspondante.

2. Transducteur selon l'une des revendications précédentes, pour lequel le tube de mesure est excité, en fonctionnement, au moyen du circuit d'excitation, au moins partiellement de telle sorte qu'il oscille au moins partiellement, notamment essentiellement ou exclusivement, dans le plan de vibration primaire imaginaire.

3. Transducteur selon la revendication précédente, pour lequel le circuit d'excitation (40) est alimenté, en fonctionnement, au moins partiellement par un signal d'attaque électrique.

4. Transducteur selon l'une des revendications précédentes, pour lequel le premier élément élastique est fixé sur le tube de mesure et le contre-vibrateur de façon espacée par rapport au deuxième élément élastique.

5. Transducteur selon la revendication précédente, pour lequel le deuxième élément élastique est fixé sur le tube de mesure et le contre-vibrateur, dans une zone côté sortie située entre la zone de couplage (12#) et l'au moins un excitateur de vibrations, notamment de telle sorte que les deux éléments élastiques sont disposés, dans le transducteur, dans un plan de coupe droit du tube de mesure, s'étendant de façon imaginaire à travers la zone côté entrée et la zone côté sortie.

6. Transducteur selon l'une des revendications précédentes, pour lequel le circuit d'excitation comprend au moins une bobine.

7. Transducteur selon la revendication précédente, pour lequel l'au moins une bobine du circuit d'excitation est reliée mécaniquement avec le contre-vibrateur, notamment couplée de façon rigide.

8. Transducteur selon la revendication précédente, pour lequel un premier élément élastique et le premier capteur de vibrations sont chacun fixés partiellement le long d'au moins une ligne périphérique commune, côté entrée, du tube de mesure, et pour lequel le deuxième élément élastique et le deuxième capteur de vibrations sont chacun fixés partiellement le long d'au moins une ligne périphérique commune, côté sortie, du tube de mesure.

9. Transducteur selon l'une des revendications précédentes,
- pour lequel le tube de mesure (10) et le contre-vibrateur (20) sont alignés l'un par à l'autre essentiellement de manière coaxiale : et/ou
- pour lequel le tube de mesure (10) est entouré au moins partiellement par le contre-vibrateur (20) ; et/ou
- pour lequel le contre-vibrateur (20) est pour l'essentiel de forme tubulaire ; et/ou
- pour lequel le contre-vibrateur (20) est pour l'essentiel droit ; et/ou
- pour lequel le tube de mesure (10) s'étend avec pour l'essentiel une section constante, notamment de forme annulaire, entre les deux zones de couplage (11#, 12#) ; et/ou
- pour lequel le tube de mesure (10) est pour l'essentiel de forme cylindrique ; et/ou
- pour lequel le tube de mesure (10) communique avec la conduite par l'intermédiaire d'un élément de tube d'entrée (11) débouchant côté entrée et par l'intermédiaire d'un élément de tube de sortie (12) débouchant côté sortie, et pour lequel le boîtier de transducteur (30) est fixé sur l'élément de tube d'entrée (11) et sur l'élément de tube de sortie (12).

10. Transducteur selon l'une des revendications précédentes, pour lequel le tube de mesure (10) est pour l'essentiel droit.

11. Transducteur selon la revendication précédente
- pour lequel le contre-vibrateur exécute également, en fonctionnement, au moins temporairement des vibrations de flexion autour de l'axe de vibration de flexion, et les éléments élastiques sont fixés, lorsque le contre-vibrateur exécute des vibrations de flexion, sur le contre-vibrateur le long d'une fibre neutre, pour l'essentiel sans effet distorsif, du contre-vibrateur ; et/ou
- pour lequel le tube de mesure exécute, en fonctionnement, au moins partiellement des vibrations de torsion autour d'une axe de vibration de torsion pour l'essentiel parallèle, notamment coïncidant, avec l'axe de vibration de flexion.

12. Transducteur selon l'une des revendications précédentes,
- pour lequel les éléments élastiques sont chacun fixés sur le tube de mesure avec une première extrémité côté tube de mesure, notamment en formant respectivement une structure rigide et/ou sans jeu, et sur le contre-vibrateur avec une deuxième extrémité côté contre-vibrateur, notamment en formant respectivement une structure rigide et/ou sans jeu ; et/ou
- pour lequel chacun des deux éléments élastiques, notamment de conception identique, est formé au moyen d'une tige disposée dans le transducteur, notamment métallique et/ou s'étendant pour l'essentiel en direction axiale par rapport au tube de mesure et/ou au contre-vibrateur : et/ou
- pour lequel les deux éléments élastiques sont disposés dans le transducteur selon une symétrie ponctuelle par rapport à un centre de gravité du tube de mesure ; et/ou
- pour lequel chacun des deux éléments élastiques est logé partiellement en des points d'intersection imaginaires du tube de mesure avec le plan de vibration secondaire (YZ), notamment de telle sorte que chacun des deux éléments élastiques sont logés partiellement également en des points d'intersection imaginaires du contre-vibrateur avec le plan de vibration secondaire (YZ).

13. Transducteur selon l'une des revendications précédentes, comprenant en outre un troisième élément élastique et un quatrième élément élastique, chacun des quatre éléments élastiques étant fixé sur le tube de mesure et le contre-vibrateur de façon espacée par rapport aux zones de couplage (11#, 12#) et au circuit d'excitation (40).

14. Transducteur selon la revendication précédente, pour lequel chacun des quatre éléments élastiques, notamment de conception identique, est respectivement espacé par rapport à chacun des trois autres éléments élastiques, notamment de telle sorte que les éléments élastiques (61, 63) correspondant par paires côté entrée sont placés respectivement pour l'essentiel de manière diamétralement opposée sur le tube de mesure (10) et les éléments élastiques (62, 64) correspondant par paires côté sortie sont placés respectivement pour l'essentiel de manière diamétralement opposée sur le tube de mesure (10).

15. Utilisation d'un transducteur selon l'une des revendications précédentes dans un appareil de mesure en ligne destiné à la mesure et/ou la surveillance d'au moins un paramètre, notamment un débit massique, *m*, une densité, *ρ*, et/ou une viscosité, *η*, d'un produit s'écoulant dans une conduite, notamment un débitmètre Coriolis, un densimètre ou un viscosimètre.
